# EUROPEAN PATENT SPECIFICATION

(11) **EP 4 278 164 B1**
(45) Date of publication and mention of the grant of the patent: **16.10.2024**
(21) Application number: 21840636.1
(22) Date of filing: 23.12.2021
(51) Int. Cl.: G01N 15/10, G01N 15/1434, G01N 15/14, G01N 15/1433, G03H 1/04

(54) **CALIBRATION OF DEVICES FOR OPTICAL ANALYSIS OF BLOOD SAMPLES**
KALIBRIERUNG VON VORRICHTUNGEN ZUR OPTISCHEN ANALYSE VON BLUTPROBEN
ÉTALONNAGE DE DISPOSITIFS POUR L'ANALYSE OPTIQUE D'ÉCHANTILLONS SANGUINS

(30) Priority: 15.01.2021 EP 21151845
(43) Date of publication of application: 22.11.2023
(73) Proprietor: Technische Universität München, 80333 München (DE)
(72) Inventor: UGELE, Matthias, 84137 Vilsbiburg/OT Seyboldsdorf (DE); KLENK, Christian, 85521 Ottobrunn (DE); HAYDEN, Oliver, 85368 Moosburg (DE); KASPERS, Bernd, 85604 Zorneding (DE); BURKHARDT, Nina, 81247 Munich (DE); RÖHRL, Stefan, 93342 Reißing (DE); HEIM, Dominik, 80798 Munich (DE)
(74) Representative: Lucke, Andreas
(86) International application number: PCT/EP2021/087485
(87) International publication number: WO 2022/152543

(56) References cited:
- US-A1- 2006 203 226
- US-A1- 2008 265 130
- US-A1- 2013 130 266
- US-A1- 2017 333 903
- US-A1- 2019 195 774
- PATRIK LANGEHANENBERG ET AL: "Automated three-dimensional tracking of living cells by digital holographic microscopy", JOURNAL OF BIOMEDICAL OPTICS, vol. 14, no. 1, 1 January 2009 (2009-01-01), pages 014018, XP055043026, ISSN: 1083-3668, DOI: 10.1117/1.3080133

## Description

### FIELD OF THE INVENTION

The present invention is in the field of biomedical research and clinical diagnostics. In particular, the invention relates to a method of calibrating a device for optical analysis of a sample containing biological cells as well as a corresponding device, a calibration sample kit and a computer program product.

### BACKGROUND

Many diseases can be detected by analyzing a blood sample of a patient. One example for such an analysis is a complete blood count, in which the amounts of various constituents of a blood sample are determined, e.g. the number of platelets, red blood cells, white blood cells and/or subtypes thereof. A complete blood count typically involves a plurality of different measurement techniques such as impedance measurements, optical absorption and scattering measurements, and fluorescence counting or imaging. Many of these measurements require complex sample preparation procedures like lysis, staining, and/or labeling of cells. Moreover, automatic detection in particular of various subtypes of white blood cells is challenging and thus often not reliable. Therefore, manual analysis of the sample may be required in some cases, e.g. using microscopic images of stained blood smears. The latter, however, is usually limited to rather small numbers of cells, e.g. between 100 and 200 cells, and may thus not be suitable for detecting rare anomalies.

In recent years, digital holographic microscopy was demonstrated to be a powerful tool for performing blood counts, see e.g. M. Ugele et al., Adv. Sci. 1800761 (2018*)* and US 2019/0195774 A1. A digital holographic microscope uses interference between an imaging beam and a reference beam to obtain phase as well as amplitude information of light transmitted by a sample and for example allows for reconstructing a quantitative phase shift image of the sample. Such images can be used to reliably identify cell types based on the analysis of morphological parameters and/or using machine learning classifiers.

Digital holographic microscopes, however, require careful alignment of the sample as well as the imaging system, which has so far prevented wide spread use in clinical laboratories. Moreover, simple and reliable calibration tests for assessing whether a device for blood sample analysis is functional or not are required in these settings for both practical and regulatory reasons. Conventional calibration samples for blood sample analysis such as synthetic microstructures or artificial blood comprising stabilized cells, however, are not suitable for calibrating digital holographic microscopes, which due to their increased sensitivity also have stricter requirements with regard to the calibration. Fixation of cells for preparing the artificial blood may for example lead to morphological changes of the cells. Furthermore, known calibration samples typically have to be specifically adapted to certain types of devices, which limits their applicability.

P. Langehanenberg et al., Journal of Biomedical Optics 14(1), 014018 (2009) discloses a method for automated three-dimensional tracking of living cells by digital holographic microscopy using an automated focus realignment by numerical propagation of the digital holographically reconstructed object wave.

US 2008/0265130 A1 describes procedures for correcting wave front deformations in a wave front sensing apparatus using digital operators that are calibrated based on data from reference areas of a specimen such as areas producing a constant phase function.

### SUMMARY OF THE INVENTION

The object of the invention is thus to provide a sensitive and reliable method for calibrating devices for optical analysis of blood samples, in particular digital holographic microscopes.

This object is met by a method of calibrating a device for optical analysis of a sample containing biological cells according to claim 1, a device according to claim 6, a calibration sample kit according to claim 11, and a computer program product according to claim 15. Embodiments of the present invention are detailed in the dependent claims.

The method of calibrating a device for optical analysis of a sample containing biological cells according to the invention comprises (1) providing a calibration sample comprising one or more red blood cells having a nucleus and (2) determining a first optical distance value and a second optical distance value using the device. The first and second optical distance values characterize an optical path length along a first and second optical path, respectively, that extends through the calibration sample. The first optical path extends through the nucleus of a target cell that is selected from the one or more red blood cells, whereas the second optical path extends through the target cell, but not through the nucleus of the target cell. The method further comprises (3) comparing the first and second optical distance values to one or more reference values; and (4) determining whether the device is functional based on the comparison of the determined optical distance values and the one or more reference values. The above numbering is for clarity only and does not imply a certain order of execution of the method. As far as technically feasible, the method may be executed in an arbitrary order and steps thereof may be executed simultaneously at least in part.

The device is configured to analyze samples containing biological cells, in particular blood samples, by optical means, for example by taking one or more microscopic images of the respective sample or probing the respective sample with a focused beam of light, e.g. a laser beam. In particular, the device is configured to determine optical distance values, which characterize an optical path length along an optical path extending through the respective sample or at least a part thereof. The optical path may for example extend between opposing sides of the respective sample and/or of a supporting structure such as a microscopy slide or a microfluidic system that the respective sample is provided on or in. In other words, in some examples, the optical path may not comprise any portions that lie outside of the respective sample and/or of the supporting structure. In some embodiments, the first and second optical path may be parallel. The optical distance value may for example characterize a distance and/or a refractive index associated with the respective optical path. In a preferred embodiment, the optical distance value characterizes a phase shift of light propagating along the respective optical path. In some examples, the optical distance value may be determined relative to a background or offset value, e.g. as a difference to an optical distance value of a reference path or a plurality of reference paths. The device may in particular comprise a microscope configured to take phase shift images, in particular a digital holographic microscope, e.g. as detailed below.

The calibration sample comprises at least one eukaryotic red blood cell, which - unlike human red blood cells - has a nucleus. Preferably, the calibration sample comprises a plurality of eukaryotic red blood cells, e.g. between 100 and 10⁵ red blood cells. In some examples, the calibration sample may further comprise other types of cells, in particular other types of blood cells, e.g. platelets and/or white blood cells. The calibration sample may for example be provided on a substrate, e.g. a microscopy slide. In a preferred embodiment, the calibration sample is a fluid sample, which may for example be provided or prepared in a microfluidic system, e.g. as detailed below.

The first and second optical distance values are compared with one or more reference values. Based on this comparison, it is determined whether the device is functioning properly or not, e.g. whether the device provides reliable measurements of optical distance values. A difference between the first and second optical distance values may for example be compared to a first reference value. This may for example comprise determining whether the difference between the first and second optical distance values lies within a predetermined range around the first reference value. The predetermined range may for example be a relative range, e.g. between ±0.5% and ±10% of the first reference value, or may be an absolute range, e.g. a range corresponding to an optical path length difference between ±0.2 nm and ±20 nm, in one example between ±0.35 nm and ±7 nm, or to a phase shift between ±5 · 10⁻⁴ π and 5 · 10⁻² π, in one example between 8 · 10⁻⁴ π and 1.7 · 10⁻² π. In another example, the first reference value may for example be an upper or lower bound for the difference between the first and second optical distance values, i.e. the device may be considered as functional if the difference is below or above the first reference value. If the device is determined to be non-functional, the method may also comprise performing an alignment procedure, e.g. as detailed below.

In some examples, the first and second optical distance values may be compared with a first and second reference value, respectively. This may for example comprise determining whether the first and second optical distance values lie within a predetermined range around the respective reference value, e.g. similar as described above. The device may for example be considered as functional if one or both optical distance values are within the respective range. In other examples, the first and second reference values may for example be upper or lower bounds for the respective optical distance value, i.e. the device may be considered as functional if one or both optical distance values are below or above the respective reference value. In some embodiments, the first and second optical distance values may be determined relative to an optical distance value of one or more reference paths, e.g. as detailed below.

Preferably, the determination of the first and second optical distance values is performed for a plurality of target cells selected from the one or more red blood cells, e.g. between 100 and 1000 target cells, in one example between 1000 and 10⁴ target cells. The method may comprise determining an average of respective optical distance values, e.g. a mean or median, and comparing the averages of the first and second optical distance values to the one or more reference values.

Eukaryotic red blood cells are particularly suitable as a calibration sample for a number of reasons. Due to the fact that these cells contain a nucleus, eukaryotic red blood cells provide different reference points, e.g. at the center of the nucleus, within the cytoplasm or outside of the cell, which have a distinct composition and may thus result in different characteristic optical path lengths. Measuring the respective optical path lengths with the device allows for quickly assessing whether the device is functional or not by comparison with the one or more reference values. Moreover, eukaryotic red blood cells may be fixated, e.g. as detailed below, which facilitates the preparation of stable calibration samples, which may be used for an extended period of time, e.g. multiple weeks or even months. In addition, the calibration samples comprising the eukaryotic red blood cells may be prepared similar to the samples that are to be analyzed with the device, thereby providing a calibration standard that closely resembles the samples under test. Furthermore, the optical path length is a quantity that is highly sensitive to the alignment of the calibration sample as well as of the device, thereby allowing for detecting even minor issues with the device. After performing the calibration, the device may for example be used for clinical applications such as analyzing blood samples of patients if the device is functional.

In some embodiments, the method further comprises determining a third optical distance value using the device. The third optical distance value may for example characterize an optical path length along a third optical path extending through the calibration sample, but not through any of the one or more red blood cells or any of the other cells in the calibration sample. Preferably, the third optical path extends through a point in close proximity to the target cell, e.g. in a sample fluid or sample medium surrounding the target cell. The point through which the third optical path extends may for example lie within 0 µm to 20 µm in some examples within 0.5 µm and 5 µm in one example within 1 µm to 3 µm from a membrane of the target cell.

The method may further comprise comparing the first, second, and third optical distance values to the one or more reference values. Preferably, the method comprises comparing pairwise differences between the first, second, and third optical distance values to the one or more reference values. The method may for example comprise comparing a difference between the first and third optical distances values to a first reference value and comparing a difference between the second and third optical distance values to a second reference value. In other words, the third optical distance value may be used as a background or offset value. This comparison may also be taken into account when determining whether the device is functional. For example, the device may be considered as functional if at least one, in some examples at least two pairwise differences between the first, second, and third optical distance values are within a respective predetermined range around the respective reference value, e.g. if at least one or both of the differences between the first and third optical distance values and between the second and third optical distance values are within a respective pre-determined range around the respective reference value.

In other examples, the method may comprise comparing the third optical distance value to a third reference value. In some examples, the device may be considered as functional if at least two, in some examples all of the first, second, and third optical distance values are within a respective predetermined range around a respective reference value. In some examples, the determination of the third optical distance value may be performed for a plurality of target cells selected from the one or more red blood cells, e.g. to obtain an average value as described above for the first and second optical distance values.

In some embodiments, the method may comprise determining additional optical distance values, e.g. along one or more optical paths each of which extends either through the nucleus of the target cell, through the cytoplasm of the target cell or through the sample fluid, and comparing the additional optical distance values to respective reference values. In some examples, optical distance values may be determined at a plurality of discrete or continuous positions along one or more paths through the target cell or a part thereof, e.g. to obtain an optical distance value curve or a two-dimensional distribution of optical distance values, which may for example be compared with a reference curve or distribution to determine whether the device is functional. In one example, the optical distance values may be averaged azimuthally around a center of the target cell or the nucleus thereof.

In some embodiments, the one or more red blood cells are red blood cells of non-mammalian vertebrates. The one or more red blood cells may in particular be red blood cells of birds, preferably red blood cells of chickens. In contrast to mammalian red blood cells and in particular human red blood cells, red blood cells of non-mammalian vertebrates have a nucleus and typically have an ellipsoidal shape as opposed to the biconcave disk-like shape of mammalian red blood cells. Furthermore, optical path lengths and thus phase shifts through red blood cells of birds are similar to those of human red blood cells. The calibration of the device may thus be performed in the same range that is subsequently used for performing the analysis of actual samples of human blood. Blood of birds and in particular chickens is also readily available. In other examples, the one or more red bloods cells may also be red blood cells of reptiles, in particular frogs.

In a preferred embodiment, the calibration sample comprises a sample fluid containing the one or more red blood cells. The sample fluid may for example be a water-based solution. The calibration sample may also comprise other cell types in addition to the one or more red blood cells, in particular other types of blood cells such as white blood cells and/or platelets. In some examples, the calibration sample may comprise whole blood, which may e.g. have been diluted to obtain the sample fluid. Preferably, the cells in the calibration sample have been fixated to preserve the cells, e.g. using one or more chemical fixatives, in particular crosslinking fixatives such as formaldehyde and glutaraldehyde, e.g. as detailed below.

Preferably, the sample fluid is provided in a measurement volume in a microfluidic system, e.g. in a channel or a chamber of a microfluidic chip. In some examples, the sample fluid may already be provided in the measurement volume, e.g. by providing the microfluidic system with the sample fluid therein and placing the microfluidic system in a mount or holder of the device. Alternatively, the method may comprise preparing the sample fluid in the measurement volume, e.g. by generating a flow of the sample fluid through the microfluidic system.

In a preferred embodiment, providing the sample fluid in the measurement volume comprises hydrodynamic and/or viscoelastic focusing of the one or more red blood cells in the microfluidic system, e.g. as detailed below. This may for example allow for a precise positioning of the one or more red blood cells at a reference point relative to the device, e.g. in or adjacent to a focal plane of the device. Hydrodynamic focusing may comprise generating one or more sheath flows, in particular laminar sheath flows, surrounding the sample fluid, for example in the channel or chamber of the microfluidic chip, e.g. to confine a flow of the sample fluid along one or more directions to a small volume at the center of the channel or chamber or in the vicinity of a wall of the channel or chamber. Viscoelastic focusing may for example be achieved by providing a viscoelastic sample fluid, e.g. a sample fluid containing polymers such as polyethylene glycol, hyaluronic acid and/or polyvinylpyrrolidone. The polymers may be mixed with a medium, e.g. phosphate-buffered saline (PBS), wherein the concentration of the polymer can for example be between 0.005% and 5% depending on the molecular weight and the type of the polymer. The molecular weight of the polymer can for example be between *M_{W}* = 10.000 and 10.000.000 depending on the type of polymer. A viscoelastic fluid may exert hydrodynamic forces on the one or more red blood cells, thereby inducing a controlled motion perpendicular to a direction of flow.

In a preferred embodiment, the device comprises a microscope that is configured to take phase shift images. A phase shift image of a sample may encode a phase shift of light as a function of position, e.g. a phase shift of light reflected off or propagating through the sample as a function of the position in the sample. Preferably, the microscope is a quantitative phase-contrast microscope configured to determine an absolute value of the phase shift. In other examples, the microscope may only be configured to determine the phase shift modulo 2π. The microscope may for example be configured to obtain the phase shift through interference of light, e.g. between a probe or imaging beam and a reference beam. The probe beam may for example pass through the sample, whereas the reference beam may not pass through the sample or may pass through the sample at a fixed position within the sample. In other examples, the reference beam may be split from the probe beam after having passed through the sample.

Preferably, the device comprises a digital holographic microscope, which is configured to take phase shift images as well as amplitude or intensity images, wherein an intensity image may encode an intensity of light as a function of position, e.g. an intensity of light reflected off or transmitted through the sample as a function of the position in the sample. The digital holographic microscope may for example interfere an image of the sample, e.g. an imaging beam of light transmitted through the sample, with a reference beam, wherein the reference beam may pass through the sample or may not pass through the sample. The digital holographic microscope may be configured to extract or reconstruct the phase shift and intensity images from one or more interference images. The digital holographic microscope may be an on-axis digital holographic microscope, in which the imaging beam and the reference beam propagate along the same axis when interfering, or may be an off-axis digital holographic microscope, in which the imaging beam and the reference beam interfere under an angle. Such digital holographic microscopes are for example known from WO 2004/102111 A1 and WO 2011/042442 A1. In other examples, the device may comprise another type of quantitative phase-contrast microscope, e.g. a holographic interference microscope or a ptychographic imaging device.

Preferably, determining the first optical distance value comprises determining a first phase shift at a first position in a phase shift image of the calibration sample, wherein the first position is within the nucleus of the target cell, in particular in a central region of the nucleus of the target cell. Furthermore, determining the second optical distance value may comprise determining a second phase shift at a second position in the phase shift image of the calibration sample, wherein the second position is within the cytoplasm of the target cell, preferably adjacent to the nucleus of the target cell, e.g. between 0 µm and 10 µm in one example between 1 µm and 3 µm from an outer surface of the nucleus. Similarly, determining the third optical distance value may comprise determining a third phase shift at a third position in the phase shift image of the calibration sample, wherein the third position is outside of any of the one or more red blood cells, e.g. within the sample fluid. Preferably, the third position is adjacent to the target cell, e.g. between 0 µm and 20 µm in one example between 1 µm and 5 µm from a membrane of the target cell. The first, second, and third reference values may be first, second, and third reference phase shift values. In some examples, determining the first, second, and/or third phase shifts may comprise spatial averaging of the phase shift image, e.g. in a region surrounding the respective position or an azimuthal averaging around a center of the target cell or the nucleus thereof.

In some embodiments, the method may further comprise determining the first, second, and/or third positions in the phase shift image by identifying a plateau-like region within the nucleus of the target cell, the cytoplasm of the target cell and the sample fluid, respectively, in the phase shift image. A phase shift image of a eukaryotic red blood cell may exhibit regions of constant or approximately constant phase shift, e.g. at the center of the nucleus, in a portion of the cytoplasm surrounding the nucleus and in the sample fluid, e.g. in a portion of the sample fluid surrounding the target cell. A plateau-like region may for example exhibit a phase shift that varies by less than 10%, in one example less than 5% throughout the plateau-like region. Identifying the plateau-like region may comprise spatial averaging of the phase shift image, e.g. azimuthal averaging around a center of the target cell or the nucleus thereof.

In some examples, the method may further comprise determining an orientation of one or more red blood cells in the calibration sample, e.g. from the phase shift image or from a spatial distribution of optical distance values. The orientation may for example be the orientation of the respective cell relative to the first and/or second optical path. In one embodiment, a cell may only be selected as the target cell if the respective cell has a certain orientation relative to the first and/or second optical path, e.g. if an angle between an axis of the cell, e.g. a symmetry axis or a principal axis of the cell, and the first and/or optical path is within a certain range, for example between -10° and +10° or between 80° and 100°. Additionally or alternatively, the determined optical distance values and/or phase shifts may be corrected for the orientation of the target cell. For example, a corrected value associated with a certain orientation of the target cell, e.g. an orientation in which an axis of the target cell would be parallel to the first and/or second optical path, may be calculated from the determined value, e.g. using a pre-determined calibration curve, a refractive index of the red blood cells, a refractive index of the sample fluid, a shape of the red blood cells, and/or a size of the red blood cells.

The invention further provides a device for optical analysis of a sample containing biological cells. The device comprises a controller and a microscope configured to take phase shift images of the sample. The controller is configured to obtain a phase shift image of a calibration sample comprising one or more red blood cells having a nucleus. The controller is further configured to determine a first phase shift at a first position and a second phase shift at a second position in the phase shift image of the calibration sample. The first position is within the nucleus of a target cell selected from the one or more red blood cells and the second position is within the cytoplasm of the target cell. The controller is configured to compare the first and second phase shifts to one or more reference values and to determine whether the device is functional based on the comparison of the determined optical distance values and the one or more reference values.

The microscope may for example be configured to obtain the phase shift images through interference of light, e.g. between a probe or imaging beam and a reference beam as describe above. The probe beam may for example pass through the sample, whereas the reference beam may not pass through the sample or may pass through the sample at a fixed position within the sample. The microscope may in particular be a quantitative phase-contrast microscope that is configured to determine an absolute value of the phase shift as a function of position across the sample. The microscope may for example be a digital holographic microscope, a holographic interference microscope or a ptychographic imaging device. Preferably, the microscope is configured to take sequences or videos of phase shift images, e.g. with a frame rate of at least 10 images per second, in some examples at least 50 images per second, in one example at least 100 images per second.

The controller may be implemented in hardware, software, or a combination thereof. The controller may in particular comprise a processing device and a memory storing instructions to be executed by the processing device to provide the functionality described herein. Preferably, the controller is configured to execute a method according to one of the embodiments described herein at least in part. The controller may for example be configured to generate control signals for the microscope, e.g. to take one or more phase shift images, and to read-out phase shift images from the microscope. In other examples, the controller may be independent of the microscope and may for example be configured to receive the phase shift image from a user or to read out the phase shift image from a storage device that the phase shift images are provided on, e.g. by a user or the microscope.

To determine the first and second phase shifts, the controller may be configured to select the target cell in the phase shift image of the calibration sample, e.g. by identifying one or more red blood cells in the phase shift image and selecting the target cell from the identified cells. The controller may further be configured to select the first and second positions in the phase shift image, e.g. by identifying the nucleus and the cytoplasm of the target cell and selecting a respective point therein, for example as detailed above. The controller may e.g. be configured to identify red blood cells or constituents thereof based on spatial variations of the phase shift, spatial correlations of the phase shift, and/or one or more threshold values for the phase shift. The controller may in particular be configured to identify plateau-like regions in the phase shift image, e.g. as described above. Additionally or alternatively, the controller may use pattern recognition techniques, in particular computer or machine vision techniques, for example classifiers based on neural networks, in particular convolutional neural networks and/or multilayer perceptrons. In other examples, a user may perform some or all of the above steps, e.g. select the target cell, one or more constituents thereof, and/or the first and second positions. The controller may be configured to determine the first and second phase shifts for a plurality of target cells selected from the red blood cells in the calibration sample, e.g. to average the respective first and second phase shifts. This may comprise obtaining a plurality of phase shift images, in one example one phase shift image for each of the target cells.

The controller may be configured to determine the first and second phase shifts as described above. Determining the first and/or second phase shifts may involve spatial averaging of the phase shift image, e.g. in the vicinity of the first and second positions and/or azimuthal averaging along a circumference comprising the first and second position, respectively, e.g. around a center of the target cell or of the nucleus of the target cell.

The controller may be configured to perform the comparison of the first and second phase shifts with the one or more reference values as well as the determination of whether the device is functional based on this comparison similar as described above. The controller may for example be configured to execute the respective steps of a method according to one of the embodiments described herein using the first phase shift as the first optical distance value and the second phase shift as the second optical distance value.

In a preferred embodiment, the controller is further configured to determine a third phase shift at a third position in the phase shift image. The third position may in particular be outside of any of the one or more red blood cells in the phase shift image, e.g. in a sample fluid or sample medium surrounding the one or more red blood cells. Preferably, the third position is adjacent to the target cell, e.g. as described above. In some examples, the controller may further be configured to determine a background or offset phase shift from the phase shift image, e.g. at a position or in a region of the phase shift image at/in which there are no cells, for example in the sample fluid or medium or even outside of the calibration sample, e.g. at a reference position or region on a supporting structure for the calibration sample.

The controller may further be configured to compare the third phase shift with the one or more reference values, e.g. as detailed above. In a preferred embodiment, the controller is configured to compare a difference between the first and third phase shifts to a first reference value and compare a difference between the second and third phase shifts to a second reference value. The controller may be configured to determine whether the device is functional based on this comparison, e.g. as described above.

In some embodiments, the controller may be configured to determine additional phase shifts at other positions, e.g. within the nucleus, within the cytoplasm and/or outside of the target cell, and to compare the additional phase shifts to respective reference values. In one example, the controller may be configured to determine phase shifts at a plurality of discrete or continuous positions along one or more paths through the target cell or a part thereof, e.g. to obtain a phase shift curve or a two-dimensional distribution of phase shifts, which may for example be compared with a reference curve or distribution to determine whether the device is functional. In one example, the phase shifts may be averaged azimuthally around a center of the target cell or the nucleus thereof.

In some examples, the controller may further be configured to determine an orientation of one or more red blood cells in the calibration sample, e.g. relative to an optical axis or direction of view of the microscope, and/or to correct the determined phase shifts for an orientation of the target cell, e.g. as described above.

In a preferred embodiment, the microscope is a digital holographic microscope, which is configured to take phase shift images as well as amplitude or intensity images of the sample, e.g. as described above. The digital holographic microscope may be an on-axis digital holographic microscope or preferably an off-axis digital holographic microscope, which may be configured to extract a phase shift image from a single interference image of the sample.

In some embodiments, the device is configured to receive a microfluidic chip, e.g. to provide a fluid sample such as the calibration sample therein. The microfluidic chip may for example have a measurement volume configured to receive a sample fluid, e.g. a channel or chamber within the microfluidic chip. The microfluidic chip may further have a detection window for imaging the sample fluid in the measurement volume, wherein the detection window may for example by a transparent sidewall of the measurement volume. The device may comprise a mount that is configured to hold the microfluidic chip. Preferably, the mount and/or the microscope are adjustable, e.g. to align the microfluidic chip relative to a focus point of the microscope. The device may further be configured to image the sample fluid through the detection window with the microscope. The mount may for example be configured to hold the microfluidic chip such that the detection window faces an objective of the microscope. In some examples, the device may comprise the microfluidic chip.

The device may comprise a microfluidics unit that is configured to generate a flow of the sample fluid on the microfluidic chip, in particular through the measurement volume. The microfluidics unit may for example be configured to create a positive or negative pressure at an input and/or output port of the microfluidic chip, e.g. using a pump or an actuator. Preferably, the device and in particular the microfluidics unit is configured to hydrodynamically and/or viscoelastically focus biological cells contained in the sample fluid, e.g. the one or more red blood cells in the calibration sample, at a focus point of the microscope in the measurement volume. The microfluidics unit may for example be configured to confine the biological cells along one or more directions, e.g. to the vicinity of a focal plane of the microscope. The microfluidic unit may be configured to generate one or more sheath flows, in particular laminar sheath flows, in the measurement volume to confine the sample fluid flow, e.g. to a narrow sheet or a narrow tube or filament. The microfluidics unit may for example be configured to provide a sheath fluid to one or more input ports of the microfluidic chip, e.g. as detailed below. Additionally or alternatively, the microfluidics unit may be configured to focus the biological cells in the sample fluid by viscoelastic focusing, e.g. by adjusting one or more flow parameters of a viscoelastic fluid such as a flow rate, a flow velocity, a flow direction and/or a pressure.

In a preferred embodiment, the controller is further configured to perform an alignment procedure by changing a focus point of the microscope and/or a flow parameter associated with the microfluidic chip. The controller may in particular be configured to perform the alignment procedure in response to determining that the device is not functional based on the comparison of the determined phase shifts and the one or more reference values and/or in response to a user input. The alignment procedure may for example comprise moving the focus point of the microscope and the microfluidic chip relative to each other. The flow parameter may for example be a flow rate, a flow velocity, a pressure, and/or a flow direction associated with the sample fluid flow and/or with one or more of the sheath flows. In some examples, the alignment procedure may also comprise adjusting an image reconstruction for taking the phase shift images, e.g. a digital re-focusing to adjust a focus point for the phase shift images, each of which may for example be reconstructed from one or more interference images.

In some examples, the controller may be configured to provide an indication characterizing a status of the device based on the determination whether the device is functional or not. The status may for example indicate that the device is ready for use if the device was determined to be functional or may indicate that alignment of the device is recommend or required prior to use if the device was determined to be non-functional. The controller may for example be configured to provide the indication via a graphical user interface, e.g. on a display of the device or a display connected to the device, or via one or more status indicator lights. In one example, the controller may be configured to prevent use of the device if the device is considered non-functional, e.g. to force a user to re-align the device prior to use.

In some examples, the controller may further be configured to perform an optical blood sample analysis of a test sample comprising a plurality of blood cells, in particular a complete blood count. To perform the blood sample analysis, the controller may obtain a phase shift image of the test sample, e.g. from the microscope or storage device. The controller may be configured to determine a cell type of one or more blood cells in the test sample from the phase shift image. The controller may for example be configured to determine whether a cell is a red blood cell, a white blood cell, or a platelet. Preferably, the controller is also configured to determine subtypes of these cell types, e.g. subtypes of white blood cells such as basophiles, eosinophils, lymphocytes, monocytes and neutrophils, and/or anomalous cell types, e.g. cells showing pathological anomalies.

For this, the controller may be configured to identify cells and/or constituents thereof within the phase shift image, e.g. based on spatial variations of the phase shift, spatial correlations of the phase shift, and/or one or more threshold values for the phase shift or using pattern recognition techniques such as computer vision techniques. The controller may be configured to determine one or more morphological parameters of the cells, for example one or more geometrical parameters, e.g. a position, a size, a cross-sectional area, and/or a circumference of the cell and/or constituents thereof such as the nucleus, and/or one or more structural parameters. The one or more structural parameters may for example comprise one or more phase shifts, in particular a mean or median phase shift, a maximum and/or minimum phase shift within the cell and/or a part thereof, a variance of the phase shift within the cell and/or one or more parameters relating to spatial and/or temporal correlations of the phase shift within the cell and/or a constituent thereof, e.g. a correlation length or a correlation time.

The controller may be configured to determine the cell type based on thresholds or ranges for the morphological parameters or for parameters derived from the morphological parameters, e.g. by performing a principal component analysis. Additionally or alternatively, the controller may be configured to employ computer vision techniques for determining the cell type, e.g. one or more neural-network-based classifiers.

The invention further provides a calibration sample kit for calibrating a device for optical analysis of a sample containing biological cells using a method according to any of the embodiments described herein. The calibration sample kit comprises a sample fluid containing one or more red blood cells having a nucleus, wherein the one or more red blood cells have been fixated.

The calibration sample kit may for example comprise a container or vessel such as a vial or a microfluidic system, in which the sample fluid is stored. Preferably, the calibration sample kit is configured for use with a device for optical analysis of a sample containing biological cells according to one of the embodiments disclosed herein. The container storing the sample fluid may for example be configured to be connected with the device, e.g. received or mounted in the device. In some examples, the container may comprise a connector that is configured to provide a fluid connection with the device, e.g. with an input port of the device or with the microfluidics unit of the device.

The one or more red blood cells may in particular be red blood cells of non-mammalian vertebrates. The one or more red bloods cells may for example be red blood cells of birds, preferably red blood cells of chickens. The sample fluid may be a water-based solution and may also comprise other cell types in addition to the one or more red blood cells, in particular other types of blood cells such as white blood cells and/or platelets. In some examples, the sample fluid may comprise whole blood, e.g. whole blood diluted in a solution.

The cells in the sample fluid have been fixated to preserve the cells, in particular the structure of the cells. The cells may have been fixated using one or more chemical fixatives, in particular crosslinking fixatives such as formaldehyde and glutaraldehyde, e.g. by diluting a blood sample of a non-mammalian vertebrate or a part thereof in a solution containing the one or more chemical fixatives. The one or more fixatives may be configured to prevent biochemical reactions in the cells. In some examples, the one or more fixatives may further be configured to enhance mechanical stability of the cells.

The calibration sample kit comprises a microfluidic chip, wherein the microfluidic chip has a measurement volume such as a channel or a chamber. The sample fluid may be contained in the measurement volume. In other examples, the sample fluid may be contained in a reservoir, e.g. on the microfluidic chip or in a vial separate from the microfluidic chip, and the measurement volume may be configured to receive the sample fluid, e.g. via a fluid path or channel on the microfluidic chip that is configured to be opened and closed. The microfluidic chip may for example comprise or consist of glass, plastic, or a combination thereof. The microfluidic chip may e.g. comprise or consist of a transparent thermoplastic such as polymethyl methacrylate (PMMA).

The microfluidic chip further comprises a detection window for imaging the sample fluid in the measurement volume with a microscope. The detection window may for example be a transparent sidewall of the measurement volume or a part thereof. Preferably, the detection window is configured for optical path length measurements, in particular phase shift measurements. A transmitted wavefront error of the detection window is less than λ/2, preferably less than λ/4, in one example less than X/8. The detection window may for example comprise or consist of a transparent thermoplastic, borosilicate glass, and/or fused silica. The microfluidic chip may further comprise an illumination window, e.g. opposite the detection window, wherein the illumination window may for example be a transparent sidewall facing the detection window. Preferably, the illumination window is parallel to the detection window and also configured for optical path length measurements.

In some embodiments, the microfluidic chip is configured to hydrodynamically and/or viscoelastically focus the one or more red blood cells contained in the sample fluid. The microfluidic chip may for example comprise one or more input ports for a sheath fluid. The one or more input ports may for example be in fluid communication with the measurement volume via one or more lateral input channels, wherein the lateral input channels may e.g. terminate at a respective opening in a sidewall of the measurement chamber. A direction of flow in the lateral input channels may be at an angle relative to a direction of flow of the sample fluid in the measurement volume, for example to generate sheath flows surrounding the sample fluid flow. The sheath flows may confine the sample fluid flow in one or two directions, e.g. to a narrow sheet, which may for example have a thickness between 5 µm and 30 µm in one example between 10 µm and 20 µm or a narrow tube or filament, which may for example have a thickness between 5 µm and 30 µm in one example between 10 µm and 20 µm in two orthogonal directions. In some embodiments, the sample fluid may be a viscoelastic fluid and may e.g. contain polymers such as polyethylene glycol, hyaluronic acid or polyvinylpyrrolidone. Preferably, the microfluidic chip is configured to focus the sample fluid and/or the one or more red blood cells such that the red blood cells all propagate in the same plane or along the same path, e.g. such that a center of the red blood cells is displaced by less than 10 µm in some examples less than 5 µm in one example less than 2 µm for the respective plane or path.

In some embodiments, the calibration sample kit further comprises a list of reference values for two or more optical distance values, in particular phase shifts. The reference values may be associated with a device for optical analysis of a sample containing biological cells according to one of the embodiments disclosed herein. The reference values may for example be associated with one or more wavelengths, one or more illumination systems, one or more imaging systems, and/or one or more device types. The reference values may be indicative of whether the device is functional or not and may for example be pre-calibrated optical distance values for the one or more red blood cells in the sample fluid, e.g. values that are to be expected if the device is aligned properly. In one example, the list of reference values contains a single reference value, e.g. the first reference value. In other examples, the list of reference values contains two or more reference values, e.g. the first and second reference values. The calibration sample kit may for example contain the list of reference values in electronic form, e.g. on a storage medium, and/or in written form, e.g. in a specification sheet or a manual.

The invention further provides a computer program product comprising a set of machine-readable instructions executable by a processing device, wherein the instructions cause the processing device to: (1) obtain a phase shift image of a calibration sample comprising one or more red blood cells having a nucleus; (2) determine a first phase shift at a first position in the phase shift image, wherein the first position is within the nucleus of a target cell selected from the one or more red blood cells; (3) determine a second phase shift at a second position in the phase shift image, wherein the second position is within the cytoplasm of the target cell; (4) compare the first and second phase shifts to one or more reference values; and (5) determine whether a device that the phase shift image has been taken with is functional based on the comparison of the determined optical distance values and the one or more reference values. The above numbering is for clarity only and does not imply a certain order of execution of the instructions. As far as technically feasible, the instructions may be executed in an arbitrary order and steps thereof may be executed simultaneously at least in part.

The computer program product may in particular be configured for use with a microscope configured to take phase shift images, e.g. a digital holographic microscope. The computer program product may for example be configured for use with or may be part of a device for optical analysis of a sample containing biological cells according to one of the embodiments described herein. The computer program product may comprise further instructions, e.g. to execute a method of calibrating a device for optical analysis of a sample containing biological cells according to one of the embodiments described herein at least in part or to provide the functionality of a device for optical analysis of a sample containing biological cells according to one of the embodiments described herein at least in part.

### LIST OF FIGURES

In the following, a detailed description of the invention and exemplary embodiments thereof is given with reference to the figures. The figures show schematic illustrations of
Fig. 1a: a red blood cell having a nucleus;
Fig. 1b: an exemplary phase shift profile along a cut through the red blood cell of Fig. 1a;
Fig. 1c: a phase shift image of a red blood cell having a nucleus;
Fig. 2: a device for optical analysis of a sample containing biological cells according to an exemplary embodiment of the invention in a cross-sectional side view;
Fig. 3: a calibration sample kit for calibrating a device for optical analysis of a sample containing biological cells in accordance with an exemplary embodiment of the invention in top view;
Fig. 4: a flow diagram of a method of calibrating a device for optical analysis of a sample containing biological cells according to an exemplary embodiment of the invention;
Fig. 5: a determination of cell types in a blood sample of a chicken using a device for optical analysis of a sample containing biological cells in accordance with an exemplary embodiment of the invention;
Fig. 6a: a phase shift image of a red blood cell having a nucleus;
Fig. 6b: a gradient of the phase shift in the image of Fig. 6a;
Fig. 6c: a phase shift profile and an optical height profile along a cut through the image of Fig. 6a; and
Fig. 7: a microfluidic chip of a calibration sample kit in accordance with an exemplary embodiment of the invention.

### DESCRIPTION OF THE PREFERRED EMBODIMENTS

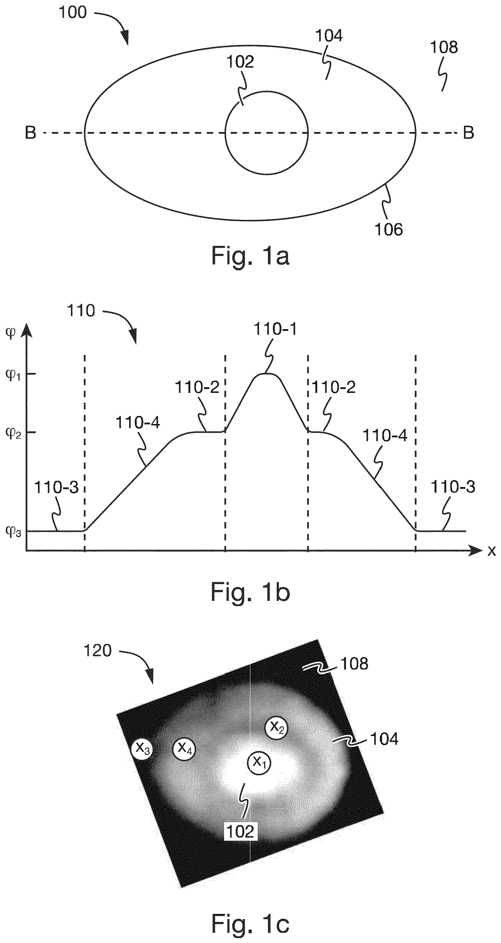

Figs. 1a, 1b, and 1c schematically illustrate the basic principles of a method of calibrating a device for optical analysis of a sample containing biological cells according to the embodiments disclosed herein. Fig. 1a shows a schematic illustration of a red blood cell 100 having a nucleus 102, Fig. 1b depicts an exemplary phase shift profile 110 along a cut through the red blood cell 100 of Fig. 1a, and Fig. 1c shows an experimentally obtained phase shift image 120 of a red blood cell having a nucleus.

The red blood cell 100 of Fig. 1a comprises a nucleus 102 that is arranged in a cytoplasm 104 of the red blood cell 100. The cytoplasm 104 is enclosed by a cell membrane 106, which defines the external structure of the red blood cell 100 and may e.g. separate the cytoplasm 104 from a sample fluid or sample medium 108 surrounding the cell 100. Red blood cells with a nucleus such as the red blood cell 100 occur for example in non-mammalian vertebrates, e.g. in reptiles and birds, whereas red blood cells of mammals and in particular humans do not possess a nucleus. Red blood cells in non-mammalian vertebrates typically have an ellipsoidal shape as illustrated in Fig. 1a and a size between 3 µm to 15 µm in every direction. Red blood cells of chickens for example have an ellipsoidal shape with a length of about 12-14 µm a width of about 6-8 µm and a height of about 3-5 µm.

Fig. 1b depicts an exemplary phase shift profile 110 along the line B-B of Fig. 1a, i.e. the phase shift ϕ that light experiences when propagating through the red blood cell 100 along the direction of view in Fig. 1a as a function of the position along the line B-B. The phase shift is related to an optical path length L through the sample via the wavelength λ of the light, 2π·L/λ, wherein the optical path length L is given by the integral over the local refractive index along the respective optical path through the red blood cell 100. The phase shift ϕ may for example be determined relative to a reference phase or a reference phase shift, which may e.g. be a background or offset value corresponding to an optical path that does not pass through the red blood cell 100, but e.g. only through the sample medium 108 surrounding the red blood cell 100.

The phase shift profile 110 exhibits a pronounced peak within the nucleus 102 of the red blood cell 100. The peak comprises a plateau-like portion 110-1 in the vicinity of the center of the nucleus 102, in which the phase shift is equal to or approximately equal to a first phase shift ϕ₁. The central plateau-like portion 110-1 may for example be associated with a central portion of the nucleus 102, in which the nucleus 102 has an approximately constant thickness in the direction of view of Fig. 1a. Adjacent to the peak within the nucleus 102, there are two plateau-like shoulder portions 110-2 within the cytoplasm 104 in the vicinity of the nucleus 102, in which the phase shift is equal to or approximately equal to a second phase shift ϕ₂, different from the first phase shift ϕ₁. The shoulder portions 110-2 may for example be associated with a central portion of the cytoplasm 104 surrounding the nucleus 102, in which the red blood cell 100 has an approximately constant thickness in the direction of view of Fig. 1a, e.g. a certain radial range around the nucleus. The difference between the first and second phase shifts may for example be between 0.05 π and 0.2 π. From the shoulder portions 110-2 towards the membrane of the red blood cell 100, the phase shift increases or decreases continuously in a transition portion 110-4, approaching a third plateau-like portion 110-3 of the phase shift profile 110, which is associated with the sample medium 108 surrounding the red blood cell 100 and may also be referred to as the background portion 110-3 in the following. In the background portion 110-3, the phase shift is equal to or close to a third phase shift ϕ₃. The difference between the first and third phase shifts may for example be between 0.2 π and 0.8 π.

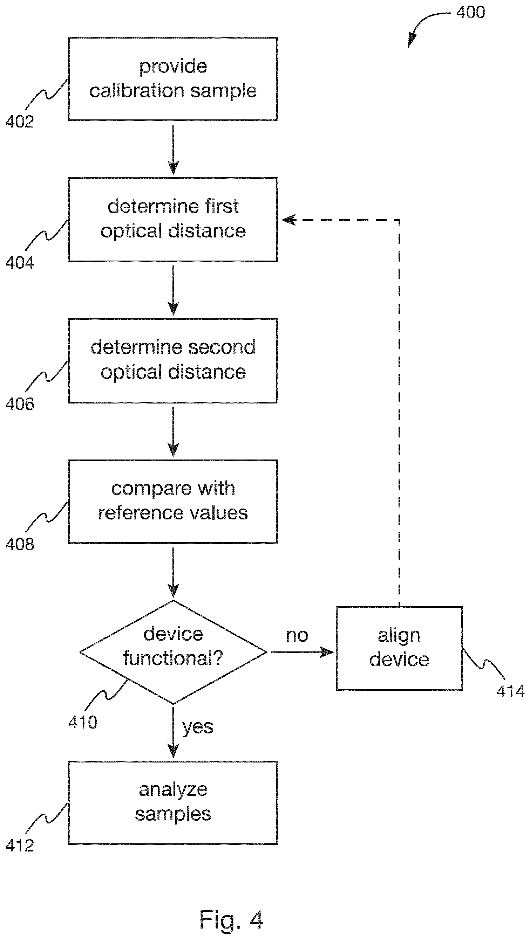

The phase shift profile 110 of the red blood cell 100 thus exhibits three characteristic plateau-like portions 110-1, 110-2, 110-3. These portions may be used to determine the first, second, and third phase shifts, which may be compared to one or more reference values in order to determine whether the device, with which the phase shift profile 110 was measured, is functional or not, e.g. using the method 400 described below with reference to Fig. 4.

Fig. 1c shows an example of a phase shift image 120 of a red blood cell having a nucleus 102, which was obtained using a digital holographic microscope. In the phase shift image 120, the nucleus 102, the cytoplasm 104, and the surrounding sample medium 108 can easily be identified. Within the phase shift image 120, four positions x₁, x₂, x₃, x₄ are indicated, wherein the first position x₁ lies in the central portion 110-1 at the center of nucleus 102, the second position x₂ lies in the shoulder portion 110-2, the third position x₃ lies in the background portion 110-3 in the sample medium 108 adjacent to the membrane 106 of the red blood cell 100 and the fourth position x₄ lies within the transition portion 110-4.

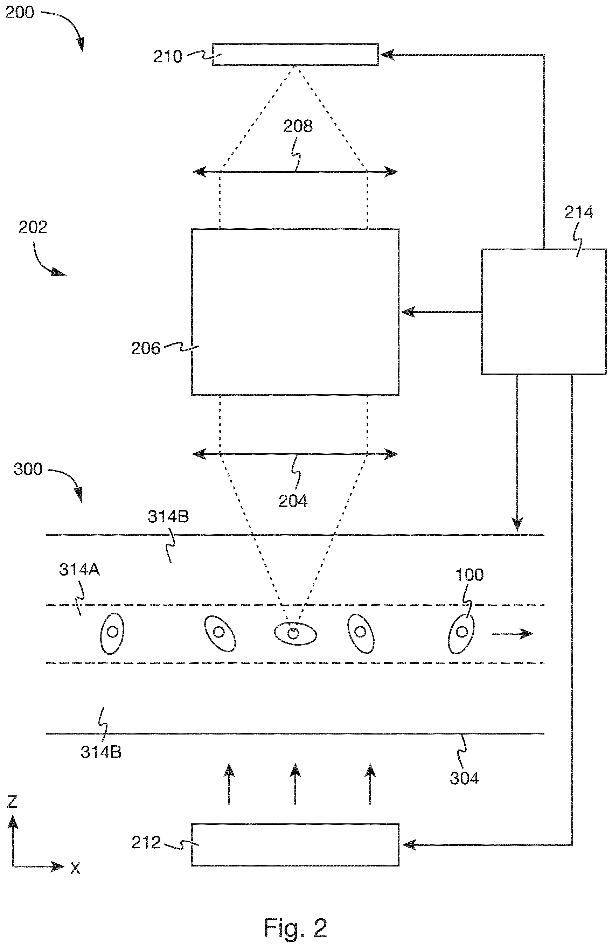

Fig. 2 depicts a schematic illustration (not to scale) of a device 200 for optical analysis of a sample containing biological cells, e.g. a blood sample containing blood cells, according to an exemplary embodiment of the invention in a cross-sectional side view. The device 200 may for example be used for executing the method 400 described below with reference to Fig. 4.

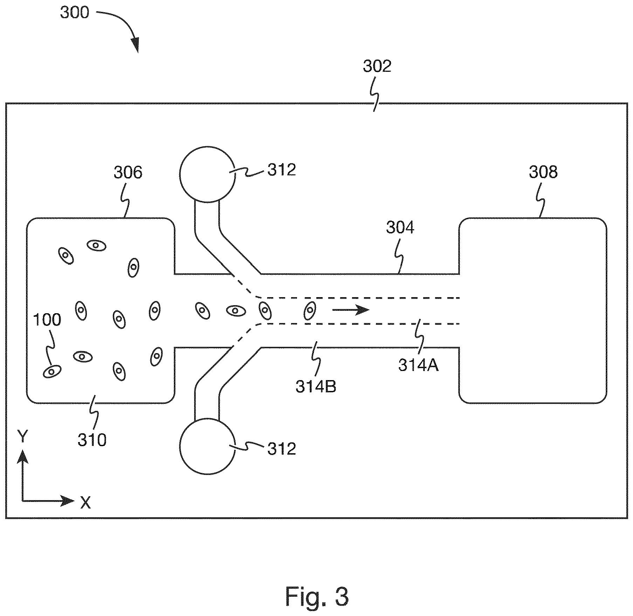

The device 200 comprises a microscope 202 that is configured to take phase shift images of a sample, e.g. a digital holographic microscope as detailed below. The sample may for example be provided on or in a supporting structure such as a microscopy slide or a microfluidic system. In the example of Fig. 2, the device 200 is configured to receive a microfluidic chip, for example the microfluidic chip 300 described below with reference to Fig. 3, which is used as an example of a supporting structure for illustrative purposes in the following. The device 200 may for example comprise a mount (not shown) that is configured to receive and hold the microfluidic chip 300. The mount is preferably adjustable, e.g. such that the microfluidic chip 300 can be aligned relative to the microscope 202, e.g. moved parallel and/or perpendicular to an optical axis of the microscope 202 and/or tilted relative to an optical axis of the microscope 202.

The microscope 202 comprises an objective 204, for example a high-NA objective having a numerical aperture larger than 0.4, in some examples larger than 0.5. A depth of field of the objective 204 may be smaller than 10 µm preferably smaller than 5 µm wherein the depth of field may e.g. be defined as a minimum Rayleigh length of a laser beam focused by the objective 204, for example at a wavelength of 1064 nm. This may allow for precise focusing on cells 100 in the sample, e.g. in a hydrodynamically focused sample flow 314A as detailed below, and may provide sufficient spatial resolution to resolve the features of the phase shift profile 110 discussed above.

The microscope 202 further comprises a holographic imaging system 206, which together with the objective 204 and an imaging lens 208 is configured to image the cells 100 in the sample fluid flow 314A onto a camera 210, wherein the camera may for example be a CCD or CMOS camera. The holographic imaging system 206 is configured to create an interference image on the camera 210, e.g. by interfering an imaging beam with a reference beam on the camera 210. The imaging beam may for example be a beam propagating from the sample to the camera 210 along a first optical path through the holographic imaging system 206. The reference beam may for example be a beam propagating from the sample to the camera 210 along a second optical path through the holographic imaging system 206. In some examples, the reference beam may be split from the imaging beam, e.g. using a beam splitter or a diffraction grating, i.e. the reference beam may also have passed through the sample. In other examples, the reference beam may not have passed through the sample and may e.g. be split from the imaging beam in front of the sample.

The microscope 202 may be an on-axis digital holographic microscope, in which the imaging beam and the reference beam propagate along the same axis when interfering, i.e. interfere at an angle of 0°. The microscope 202 may for example be configured to extract or reconstruct a phase shift image as well as an intensity image of the sample from a plurality of interference images, e.g. by varying a phase offset between the reference and imaging beams. Preferably, the microscope is an off-axis digital holographic microscope, in which the imaging beam and the reference beam interfere under an angle. In this case, the microscope 202 may be configured to extract or reconstruct the phase shift image as well as the intensity image of the sample from a single interference image.

The microscope 202 further comprises an illumination source 212. The illumination source 212 is configured to illuminate the sample, e.g. in the microfluidic chip 300, by spatially and/or temporally coherent light, wherein a coherence length of the illumination light may for example be larger than a field of view of the microscope and a coherence time of the illumination light may for example be larger than a time delay between the image and reference beams, i.e. such that an interference pattern can be observed on the camera 210. The illumination source 212 may for example comprise a laser or a light-emitting diode and may be configured to emit monochromatic light, e.g. at a wavelength between 500 nm and 1100 nm.

The device 200 further comprises a controller 214 that is configured to perform a calibration of the device 200. For this, the controller 214 is configured to obtain a phase shift image of a calibration sample comprising one or more red blood cells 100 having a nucleus 102, e.g. by generating a control signal for the microscope 202 to take the phase shift image and reading out the phase shift image from the microscope 202. The controller 214 is further configured to determine a first phase shift ϕ₁ at a first position and a second phase shift ϕ₂ at a second position in the phase shift image. The first position is within the nucleus 102 of a target cell selected from the one or more red blood cells 100 and may for example be a position on the central plateau-like portion 110-1 of the phase shift image, e.g. similar to the position x₁ in Fig. 1c. The second position is within the cytoplasm 104 of the target cell and may for example be a position in the plateau-like shoulder portion 110-2 of the phase shift image, e.g. similar to the position x₂ in Fig. 1c. The controller 214 is configured to compare the first and second phase shifts ϕ₁, ϕ₂ to one or more reference values and to determine whether the device 200 is functional based on the comparison of the determined phase shifts ϕ₁, ϕ₂ and the one or more reference values.

The controller 214 is further configured to determine additional phase shifts at other positions and to compare these phase shifts to the one or more reference values. The controller 214 is in particular configured to determine a third phase shift ϕ₃ at a third position that is adjacent to the membrane 106 of the target cell. The third position may for example be a position in the plateau-like background portion 110-3 of the phase shift image, e.g. similar to the position x₃ in Fig. 1c.

An orientation of the cells 100 relative to the optical axis of the microscope 202 may vary as illustrated in Fig. 2 and may e.g. be random in some examples. The controller 214 may be configured to determine an orientation of the cells 100 and in particular of the target cell from the phase shift image. The controller 214 may for example be configured to determine an azimuthal angle and/or a polar angle of an axis of the respective cell, e.g. a symmetry axis or a principal axis of the cell, relative to the optical axis of the microscope 202. For this, the controller 214 may for example compare an aspect ratio and/or a size of the respective cell in the two-dimensional phase shift image to a known three-dimensional aspect ratio and/or a known size of the cells 100. In some examples, the controller 214 may further be configured to correct phase shifts determined from the phase shift image to account for the orientation of the target cell, e.g. to estimate corrected phase shifts that would be obtained if the target cell had a certain orientation relative to the optical axis of the microscope 202, e.g. if a principal axis or a symmetry axis of the target cell were parallel to the optical axis. In other examples, the controller 214 may be configured to only select a cell as the target cell if the cell has a certain orientation relative to the optical axis, a certain aspect ratio and/or a certain size. In yet another example, the sample fluid flow 314A may be generated such that all cells 100 have the same orientation.

The controller 214 may in particular be configured to provide this functionality by executing some or all of the respective parts of the method 400 described below, e.g. steps 404-410. In some examples, the controller 214 may be configured to execute the entire method 400 including providing a calibration sample in step 402, performing an optical analysis of samples in step 412 and/or performing an alignment procedure in step 414. The controller 214 may be implemented in hardware, software, or a combination thereof. The controller may in particular comprise a processing device and a memory storing instructions to be executed by the processing device to provide the functionality described herein. The processing device may for example comprise a central processing unit (CPU), a graphics processing unit (GPU), a field-programmable gate array (FPGA), an application-specific integrated circuit (ASIC), or a combination thereof. In some embodiments, the controller 214 may also be configured to control the microscope 202 and/or to provide at least some of the functionality associated therewith, in particular the image reconstructions of the phase and/or intensity images.

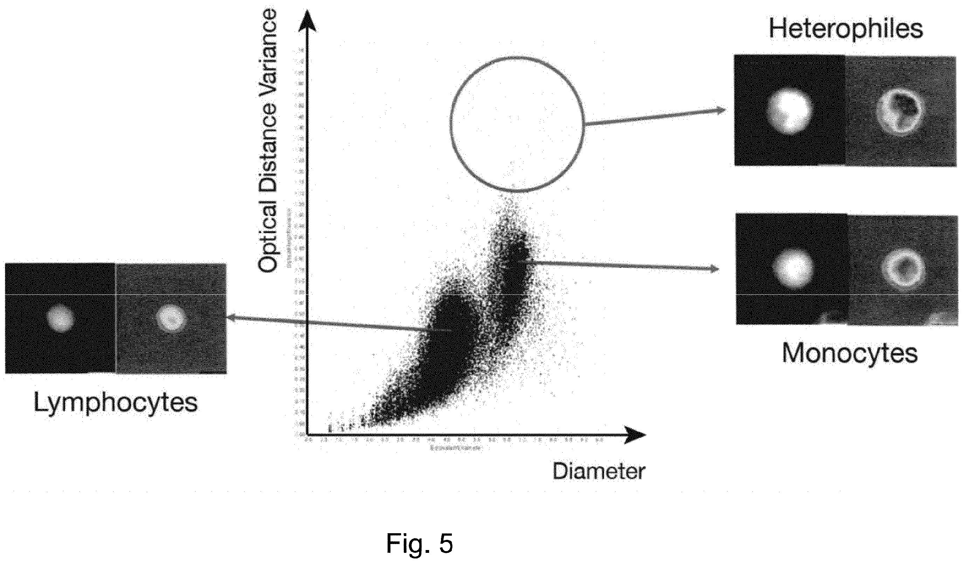

The controller 214 is further configured to perform an analysis of phase shift and/or intensity images of a sample containing biological cells taken with the microscope 202. The sample may for example be a blood sample containing blood cells, e.g. a human blood sample or an animal blood sample. The sample may for example also be provided on or in a supporting structure similar to the calibration sample, e.g. in a microfluidic chip similar to the microfluidic chip 300 of Fig. 3. The controller 214 may in particular be configured to perform a complete blood count by determining the cell types of the blood cells in the blood sample from a phase shift image and/or an intensity image of the sample, e.g. by determining morphological parameters of the cells and/or using machine vision. An example for this is described below with reference to Fig. 5. The controller 214 may for example be configured to determine whether a cell is a red blood cell, a white blood cell, or a platelet. Preferably, the controller 214 is also configured to determine subtypes of these cell types, e.g. subtypes of white blood cells such as basophiles, eosinophils, lymphocytes, monocytes and neutrophils, and/or anomalous cell types, e.g. cells showing pathological anomalies.

In some embodiments, the device 200 may comprise additional elements that are not shown in Fig. 2, for example a microfluidics unit that is configured to be connected to one or more ports of a microfluidic system. The microfluidics unit may for example be configured to generate a sample fluid flow and/or sheath flows in the microfluidic system, e.g. as described below with reference to Fig. 3. The microfluidics unit may comprise one or more reservoirs for storing fluids and/or one or more pumps or actuators for generating a flow through or in the microfluidic system.

Fig. 3 shows a schematic illustration (not to scale) of a calibration sample kit in accordance with an exemplary embodiment of the invention in a top view. The calibration sample kit is configured for use with a device for optical analysis of a sample containing biological cells such as the device 200 in order to perform a calibration of the respective device, e.g. using the method 400 of Fig. 4.

The calibration sample kit comprises a microfluidic chip 300 formed in a substrate 302, which may for example comprise or consist of a transparent thermoplastic such as polymethyl methacrylate (PMMA). The microfluidic chip 300 comprises a microfluidic channel 304, which forms a measurement volume and may thus also be referred to as the measurement volume 304 in the following. The channel 304 may for example have a cross-sectional area between 500 µm² and 1 mm² and a length between 0.5 mm and 5 mm. A sidewall of the channel 304 forms a detection window, which faces the objective 204 of the microscope 202 when mounted in the device 200, i.e. may correspond to an upper sidewall of the channel 304 as illustrated in Fig. 2. An opposing sidewall of the channel 304 forms an illumination window, which faces the illumination source 212 of the microscope 202 when the microfluidic chip 300 is mounted in the device 200, i.e. may correspond to a lower sidewall of the channel 304 as illustrated in Fig. 2. The detection and illumination windows are optimized for phase shift measurements. A transmitted wavefront error of the detection and illuminations windows may for example λ/4 or less.

The channel 304 connects a supply reservoir 306 to a waste reservoir 308. The supply reservoir 306 stores a calibration sample comprising a sample fluid 310 with a plurality of eukaryotic red blood cells 100, e.g. red blood cells of chickens. The supply reservoir 306 may for example enclose a volume between 1 mm³ and 1 cm³ and may for example contain between 100 and 10⁵ red blood cells. The red blood cells 100 in the calibration sample have been fixated to preserve the cells, in particular the structure of the cells. The cells may for example have been fixated using one or more chemical fixatives, in particular crosslinking fixatives such as formaldehyde and glutaraldehyde. In one example, the sample fluid comprises whole blood of chickens, which was diluted, e.g. at a ratio of between 1:10 and 1:1000, in a solution containing a chemical fixative, e.g. a solution containing 0.1% to 3% glutaraldehyde. In some examples, the calibration sample may be provided separate from the microfluidic chip 300, e.g. in a vial that is configured to be connected to an input port of the microfluidic chip, e.g. an input port of the supply reservoir 306 or of the channel 304.

The waste reservoir 308 may initially be empty or may comprise a buffer solution that does not contain any cells. In other examples, the sample fluid 310 and the red blood cells 100 may be contained in both the waste and supply reservoirs 306, 308. The microfluidic chip 300 may further comprise a pressure inlet and/or a pressure outlet (not shown) for applying a pressure to the supply and/or waste reservoirs 306, 308, e.g. to generate a flow 314A of the sample fluid 310 through the channel 304. The pressure inlet and outlet may for example each comprise a movable object such as a membrane or a piston to apply the pressure or may be an input and output port, respectively, that is in fluid communication with the corresponding reservoir.

The microfluidic chip 300 further comprises lateral pressure inlets 312 for generating sheath flows 314B to hydrodynamically focus the sample fluid flow 314A. In the example of Fig. 3, the lateral pressure inlets 312 are lateral input ports configured to receive a sheath fluid. The lateral input ports 312 are in fluid communication with the channel 304 via a respective lateral input channel, each of which terminates at a respective opening in a sidewall of the channel 304. The lateral input channels are angled relative to a longitudinal axis of channel 304, which defines the direction of flow of the sample fluid flow 314A. Thereby, sheath fluid flowing from the lateral input channels may create laminar sheath flows 314B that surround the sample fluid flow and hydrodynamically focus the sample fluid flow 314A, e.g. by confining the sample fluid flow 314A in one or more directions perpendicular to the longitudinal axis of the channel 304. The sample fluid flow 314A may for example be focused to a cross-sectional area between 20 µm² and 500 µm², e.g. around a center of the channel 304. This may for example ensure that the sample fluid 310 and thus the cells 100 contained therein pass through a focus point or a focal plane of the microscope 202, e.g. as illustrated in Fig. 2.

Fig. 4 shows a flow diagram of a method 400 of calibrating a device for optical analysis of a sample containing biological cells according to an exemplary embodiment of the invention. The method 400 may for example be used for calibrating the device 200 with the calibration sample kit of Fig. 3, which will be used as examples for illustration purposes in the following. This is, however, not intended to be limiting in any way and the method 400 may also be executed using another calibration sample kit according to one of the embodiments described herein or may be used for calibrating any other device for the optical analysis of samples containing biological cells that is configured to determine optical distance values characterizing optical path lengths through a calibration sample. Furthermore, the method 400 is not limited to the order of execution illustrated in the flow diagram in Fig. 4. As far as technically feasible, the method 400 may be executed in an arbitrary order and steps thereof may also be executed simultaneously at least in part.

The method 400 comprises, in step 402, providing a calibration sample comprising one or more red blood cells having a nucleus. This may for example comprise providing the calibration sample kit of Fig. 3 or providing the microfluidic chip 300 and the sample fluid 310 with the eukaryotic red blood cells 100 as separate units, e.g. by providing the sample fluid 310 in a vial together with the microfluidic chip 300 with an empty supply reservoir. The microfluidic chip 300 may be mounted in the device 200 and may e.g. be connected to the microfluidics unit of the device 200. Step 402 may further comprise providing the sample fluid 310 with the eukaryotic red blood cells 100 in the measurement volume or channel 304 of the microfluidic chip 300, e.g. by generating the sample fluid flow 314A from the supply reservoir 306 to the waste reservoir 308. This may also comprise hydrodynamically and/or viscoelastically focusing the sample fluid flow 314A to a narrow sheet or tube in the measurement volume 304 at a focus point of the microscope 202, e.g. as described above.

The method 400 further comprises, in steps 404 and 406, determining a first optical distance value and a second optical distance value, respectively, using the device 200. The first optical distance value characterizes an optical path length along a first optical path that extends through the nucleus 102 of a target cell selected from the one or more red blood cells 100 in the calibration sample. The second optical distance value characterizes an optical path length along a second optical path that extends through the target cell, but not through the nucleus 102 of the target cell, e.g. through the cytoplasm 104 of the target cell. Each of the first and second optical paths may for example extend from the illumination window of the microfluidic chip 300 through the sample fluid flow 314A in the measurement volume 304 to the detection window.

In the example of the device 200, steps 402 and 404 may comprise taking a phase shift image of the calibration sample, in particular of the cells 100 in the sample fluid flow 314A in the measurement volume 304. The target cell may be identified from the cells contained in the phase shift image, e.g. manually by a user or automatically by the controller 214.

The first optical distance value may be a first phase shift ϕ₁ that is determined at a first position in the phase shift image that is within the nucleus 102 of the target cell, e.g. at the position x₁ in the phase shift image 120 of Fig. 1c or at any other position within the central plateau-like region 110-1. In some examples, the first phase shift may be averaged spatially, e.g. over the central region 110-1 or a part thereof.

The second optical distance value may be a second phase shift ϕ₂ that is determined at a second position in the phase shift image that is outside of the nucleus 102, but within the target cell, i.e. within the cytoplasm 104, e.g. at the position x₂ in the phase shift image 120 of Fig. 1c or at any other position within the plateau-like shoulder region 110-2. In some examples, the second phase shift may be averaged spatially, e.g. over the plateau-like shoulder region 110-1 or a part thereof.

Steps 404 and 406 may comprise determining the first and second positions, e.g. manually by a user or automatically by the controller 214. This may for example comprise determining a border of the target cell and of its nucleus 102 and choosing the first and second positions relative to these borders, e.g. at a predetermined distance from the borders. In other examples, this may comprise identifying the plateau-like regions 110-1 and 110-2 in the phase shift image.

The method 400 may further comprise determining one or more additional optical distance values, each of which characterizes an optical path length along an optical path that extends through the calibration sample, e.g. through the measurement volume 304 between the illumination and detection windows. The method 400 may in particular comprises determining a third phase shift ϕ₃ at a third position in the phase shift image that is outside of the target cell 102, e.g. at a position within the sample fluid flow 314A in the measurement volume 304 at which there is no cell. The third position is preferably adjacent to the membrane of the target cell in the plateau-like background region 110-3, e.g. similar to the position x₃ in the phase shift image 120 of Fig. 1c. In some examples, the third phase shift may be averaged spatially, e.g. over the background region 110-3 or a part thereof.

Preferably, the method 400 comprises determining the first, second, and/or third phase shifts for a plurality of target cells selected from the cells 100 in the calibration sample, e.g. for between 100 and 10000 cells. This may comprise taking a plurality of phase shift images, e.g. while the sample fluid 310 flows through the measurement volume 304 from the supply reservoir 306 to the waste reservoir 308. The first, second, and/or third phase shifts may be averaged over the plurality of target cells, e.g. by calculating the corresponding mean or median. In some examples, determining the first, second, and/or third phase shift regions may also comprise performing a background subtraction, e.g. by subtracting a background phase shift associated with the sample fluid 310 and/or the microfluidic chip 300.

In step 408, the determined optical distance values are compared to one or more reference values, e.g. by comparing each of the determined optical distance value to a respective reference value or by comparing pairwise differences of the determined optical distance values to a respective reference value. For example, the difference between the first and third phase shift values Δϕ₁₃ = ϕ₁ - ϕ₃, i.e. difference between the central plateau-like region 110-1 in the nucleus 102 and the plateau-like background region 110-3 outside of the target cell, may be compared to a first reference value. The difference between the second and third phase shift values Δϕ₂₃ = ϕ₂ - ϕ₃, i.e. the difference between the plateau-like shoulder region 110-2 in the cytoplasm 104 and the background region 110-3 outside of the target cell, may be compared to a second reference value.

The method 400 further comprises, in step 410, determining whether the device 200 is functional based on the comparison of the determined optical distance values and the one or more reference values. For example, the device 200 may be considered to be functional if at least one, preferably all of the determined phase shifts and/or the respective pairwise differences are within a respective predetermined range around the corresponding reference value. The device 200 may e.g. be considered as functional if both phase differences Δϕ₁₃ = ϕ₁ - ϕ₃ and Δϕ₁₂ = ϕ₁ - ϕ₂ are closer than ±0.05π, in one example closer than ±0.017π to the first and second reference value, respectively. In other examples, different ranges may be used for the two phase differences Δϕ₁₃ and Δϕ₁₂, e.g. a fraction of the corresponding reference value, for example ±10%, in one example ±2% of the corresponding reference value.

If the device 200 is functional, the method 400 may for example proceed with analyzing one or more test samples in step 412, e.g. one or more blood samples for clinical applications. For example, a complete blood count of the blood samples may be performed using the device 200.

If the device 200 is not functional, the device 200 may for example display a corresponding message or switch on a corresponding status indicator light. In some examples, the device 200 may prevent analysis of any samples as long as the device 200 is not functional. The device 200 may for example not be functional due to a misalignment of the microfluidic chip 300, the objective 204, the illumination source 212 and/or the holographic imaging system 206. In other examples, there may be issues associated with the sample fluid flow 314A, in particular the focusing thereof. For example, the sample fluid flow 314A may not flow through the focus point of the microscope 202, but may e.g. be offset from the focus point in one or more directions.

In some embodiments, the method 400 may comprise performing an alignment procedure in step 414 if the device 200 is determined to be non-functional. This may for example comprise a realignment of the microscope 202, e.g. moving the focus point of the microscope 202 relative to the microfluidic chip 300. Additionally or alternatively, one or more flow parameters associated with the microfluidic chip 300 may be adjusted, e.g. a flow rate or flow velocity of the sample fluid flow 314A and/or of the sheath flows 314B. In some examples, steps 404-410 may be executed repeatedly, e.g. to provide feedback for the alignment procedure.

Fig. 5 illustrates a determination of cell types in a blood sample of a chicken using a device for optical analysis of a sample containing biological cells in accordance with an embodiment of the invention such as the device 200. Performing a complete blood count of chicken blood is very challenging since many of the conventional sample preparation and measurement techniques used for human blood samples either cannot be employed or are not sufficiently sensitive to correctly identify the types of cells in the blood sample, in particular different types of white blood cells. Phase shift images, however, may provide sufficient information to even distinguish between different types of white blood cells of chicken without requiring any labelling of the cells as detailed in the following.

The three main types of white blood cells in chickens are lymphocytes, monocytes, and granulocytes/heterophiles. In the example of Fig. 5, a sample comprising white blood cells was prepared from chicken blood in a density-gradient centrifuge. The sample was hydrodynamically focused in a microfluidic channel with a height of 50 µm and a width of 500 µm and then imaged with a digital holographic microscope. From the resulting phase shift images, a plurality of morphological parameters were extracted for each of the cells, including a diameter, an aspect ratio, an optical volume, and a variance in optical distance/phase shift. Based on these parameters, the three different types of white blood cells may be distinguished. The plot in Fig. 5 depicts a distribution of the cell diameter and the variance in optical distance for a plurality of cells. Three distinct clusters can be identified: lymphocytes in the lower left corner (small diameter, small variance), monocytes in the center (medium diameter, medium variance), and heterophiles at the top (medium diameter, large variance).

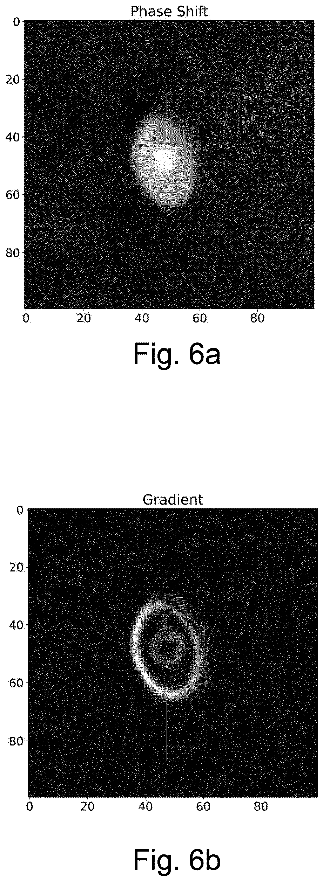

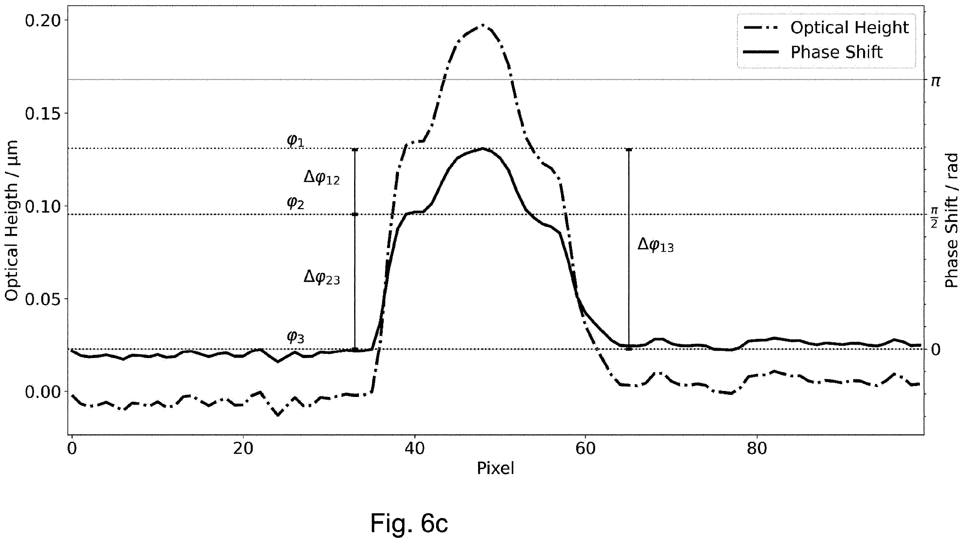

Fig. 6a shows a phase shift image of a red blood cell having a nucleus that was obtained using a device for optical analysis of a sample containing biological cells according to an exemplary embodiment of the invention, e.g. a device similar to the device 200 of Fig. 2. Fig. 6b depicts a gradient of the phase shift calculated from the image of Fig. 6a. Fig. 6c shows a phase shift profile (solid line) and the corresponding optical height profile (dashed line) along a cut through the image of Fig. 6a.

As also described above with reference to Figs. 1b, 1c, the phase shift and thus the optical height or optical path length exhibit a pronounced peak within the nucleus of the red blood cell with a central plateau-like portion. The phase shift and the optical height further exhibit a plateau-like shoulder portion within the cytoplasm of the red blood cell, which is separated from both the central plateau-like portion and the medium surrounding the cell by a respective ring-shaped region with a steep gradient, which is associated with the membrane of the nucleus and the membrane of the cell, respectively.

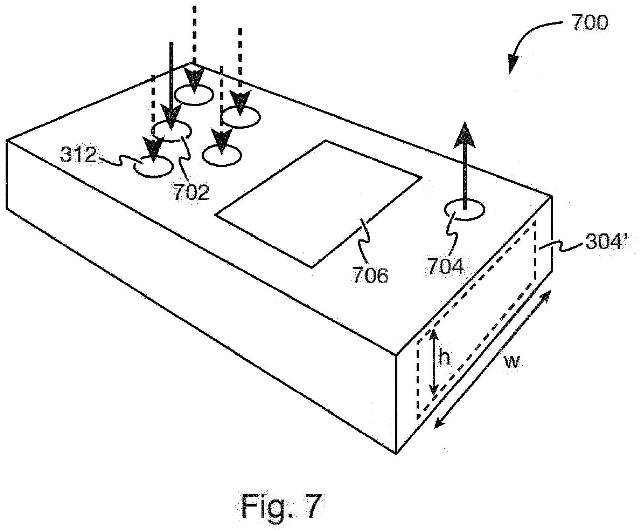

Fig. 7 shows a schematic illustration (not to scale) of a microfluidic chip 700 of a calibration sample kit in accordance with an exemplary embodiment of the invention in a perspective view. The microfluidic chip 700 is configured for use with a device for optical analysis of a sample containing biological cells such as the device 200 in order to perform a calibration of the respective device, e.g. using the method 400 of Fig. 4. The calibration sample kit may further comprise a reservoir (not shown) comprising a sample fluid containing one or more fixated red blood cells having a nucleus, wherein the reservoir is configured to be connected to an input port 702 of the microfluidic chip 700 for providing the sample fluid to the microfluidic chip 700. In other examples, the microfluidic chip 700 may be provided independent of the calibration sample kit, e.g. for use with or as part of a device for optical analysis of a sample containing biological cells according to one of the embodiments described herein, e.g. the device 200.

The microfluidic chip 700 comprises an input port or inlet 702 and an output port or outlet 704, which are connected by a microfluidic channel (not visible in Fig. 7). The microfluidic channel forms a measurement volume within a substrate of the microfluidic chip 700. The measurement volume is located underneath a transparent detection window 706 for microscopic imaging of samples in the measurement volume. The measurement volume may for example have a rectangular cross-section with a height h and a width w as indicated by the dashed line in Fig. 7. The width w may for example be between 300 µm and 700 µm e.g. 500 µm and the height h may e.g. be between 30 µm and 70 µm, e.g. 50 µm. The detection window 706 may also have a rectangular cross-section, wherein dimensions of the detection window 706 may be adapted to the dimensions of the measurement volume and/or to a field of view of a microscope used for imaging the samples.

A sample fluid comprising red blood cells with a nucleus, e.g. chicken erythrocytes, in a liquid medium, e.g. blood plasma, diluted whole blood or phosphate-buffered saline, may be provided to the microfluidic channel via the inlet 702. The microfluidic chip 700 further comprises four lateral input ports 312 for focusing of the red blood cells in the measurement volume in a plane underneath the detection window 706, e.g. by generating sheath flows for hydrodynamic and/or viscoelastic focusing of the red blood cells in a focal plane of the microscope. A combined flow rate through the inlet 702 and the four lateral input ports 312 may for example be between 0.5 µl/s and 2.0 µl/s, e.g. 1.0 µl/s. The flow rate may for example be chosen such that a flow velocity in the measurement chamber is between 0.02 m/s and 0.08 m/s, e.g. 0.04 m/s. While the red blood cells are flowing through the measurement volume, images of the cells may be recorded with the microscope, which may in particular be a digital holographic microscope. Preferably, a camera with a high frame rate, e.g. a frame rate between 100 fps and 1000 fps, is used, for example to collect a plurality of images of the cells for improved statistics.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - eukaryotic red blood cell
102 - nucleus
104 - cytoplasm
106 - membrane
108 - sample medium
110 - phase shift profile
110-1 - central region
110-2 - shoulder region
110-3 -background region
110-4 - transition region
120 - phase shift image
200 - device for optical analysis of a sample containing biological cells
202 - microscope
204 - objective
206 - holographic imaging system
208 - imaging lens
210 - camera
212 - illumination source
214 - controller
300 - microfluidic chip
302 - substrate
304 - channel/measurement volume
306 - supply reservoir
308 - waste reservoir
310 - sample fluid
312 - lateral input port
314A - sample fluid flow
314B - sheath flow
400 - method of calibrating a device for optical analysis of a sample of biological cells
402 - step of providing a calibration sample
404 - step of determining a first optical distance value
406 - step of determining a second optical distance value
408 - step of comparing the optical distance values to one or more reference values
410 - step of determining whether the device is functional
412 - step of analyzing samples
414 - step of performing an alignment procedure
700 - microfluidic chip
702 - input port
704 - output port
706 - detection window

## Claims

1. A method (400) of calibrating a device (200) for optical analysis of a sample containing biological cells, the method (400) comprising:
providing a calibration sample comprising one or more red blood cells (100) having a nucleus (102);
determining a first optical distance value using the device (200), wherein the first optical distance value characterizes an optical path length along a first optical path extending through the nucleus (102) of a target cell selected from the one or more red blood cells (100);
determining a second optical distance value using the device (200), wherein the second optical distance value characterizes an optical path length along a second optical path extending through the target cell, but not through the nucleus (102) of the target cell;
comparing the first and second optical distance values to one or more reference values; and
determining whether the device (200) is functional based on the comparison of the determined optical distance values and the one or more reference values.

2. The method (400) of claim 1, further comprising:
determining a third optical distance value using the device (200), wherein the third optical distance value characterizes an optical path length along a third optical path extending through the calibration sample, but not through any of the one or more red blood cells (100),
wherein the method (400) preferably further comprises comparing a difference between the first and third optical distances values to a first reference value and comparing a difference between the second and third optical distance values to a second reference value.

3. The method (400) of claim 1 or 2, wherein the one or more red blood cells (100) are red blood cells of non-mammalian vertebrates, in particular red blood cells of birds, preferably red blood cells of chickens.

4. The method (400) of any one of the preceding claims, wherein the calibration sample comprises a sample fluid (310) containing the one or more red blood cells (100), in particular wherein the sample fluid (310) is provided in a measurement volume (304) in a microfluidic system (300, 700), wherein providing the sample fluid (310) in the measurement volume (304) preferably comprises hydrodynamic and/or viscoelastic focusing of the one or more red blood cells (100) in the microfluidic system (300, 700).

5. The method (400) of any one of the preceding claims, wherein the device (200) comprises a microscope (202) configured to take phase shift images, in particular a digital holographic microscope, wherein preferably:
determining the first optical distance value comprises determining a first phase shift (ϕ₁) at a first position (x₁) in a phase shift image (120) of the calibration sample, wherein the first position (x₁) is within the nucleus (102) of the target cell; and
determining the second optical distance value comprises determining a second phase shift (ϕ₂) at a second position (x₂) in the phase shift image (120) of the calibration sample, wherein the second position (x₁) is within the cytoplasm (104) of the target cell,
in particular wherein the method (400) further comprises determining the first and second positions (x₁, x₂) in the phase shift image (120) by identifying a plateau-like region within the nucleus (102) and the cytoplasm (104), respectively, of the target cell in the phase shift image (120).

6. A device (200) for optical analysis of a sample containing biological cells, the device (200) comprising a controller (214) and a microscope (202) configured to take phase shift images of the sample, wherein the controller (214) is configured to:
obtain a phase shift image (120) of a calibration sample comprising one or more red blood cells (100) having a nucleus (102);
determine a first phase shift (ϕ₁) at a first position (x₁) in the phase shift image (120), wherein the first position (x₁) is within the nucleus (102) of a target cell selected from the one or more red blood cells (100);
determine a second phase shift (ϕ₂) at a second position (x₂) in the phase shift image (120), wherein the second position (x₂) is within the cytoplasm (104) of the target cell;
compare the first and second phase shifts (ϕ₁, ϕ₂) to one or more reference values; and
determine whether the device (200) is functional based on the comparison of the determined phase shifts (ϕ₁, ϕ₂) and the one or more reference values.

7. The device (200) according to claim 6, wherein the controller (214) is further configured to:
determine a third phase shift (ϕ₃) at a third position (x₃) in the phase shift image (120), wherein the third position (x₃) is adjacent to the target cell; and
compare a difference between the first and third phase shifts (ϕ₁, ϕ₃) to a first reference value and compare a difference between the second and third phase shifts (ϕ₂, ϕ₃) to a second reference value.

8. The device (200) according to claim 6 or 7, wherein the microscope (202) is a digital holographic microscope.

9. The device (200) according to any one of claims 6 to 8, wherein the device (200) is configured to:
receive a microfluidic chip (300, 700) having a measurement volume (304) configured to receive a sample fluid (310) and a detection window (706) for imaging the sample fluid (310) in the measurement volume (304); and
image the sample fluid (310) through the detection window (706) with the microscope (202),
in particular wherein:
the device (200) is configured to hydrodynamically and/or viscoelastically focus biological cells (100) contained in the sample fluid (310) at a focus point of the microscope (202) in the measurement volume (304); and/or
the controller (214) is further configured to perform an alignment procedure by changing a focus point of the microscope (202) and/or a flow parameter associated with the microfluidic chip (300, 700).

10. The device (200) according to any one of claims 6 to 9, wherein the controller (214) is further configured to perform an optical blood sample analysis of a test sample comprising a plurality of blood cells by:
obtaining a phase shift image (120) of the test sample; and
determining a cell type of one or more blood cells in the test sample from the phase shift image (120).

11. A calibration sample kit for calibrating a device (200) for optical analysis of a sample containing biological cells using a method (400) according to any one of claims 1 to 5, the calibration sample kit comprising a sample fluid (310) containing one or more red blood cells (100) having a nucleus (102), wherein the one or more red blood cells (100) have been fixated, the calibration sample kit further comprising a microfluidic chip (300, 700) having a measurement volume (304) and a detection window (706) for imaging the sample fluid (310) in the measurement volume (304) with a microscope (202), wherein a transmitted wavefront error of the detection window (706) is less than λ/2.

12. The calibration sample kit of claim 11, wherein:
the one or more red blood cells (100) are red blood cells of non-mammalian vertebrates, in particular red blood cells of birds, preferably red blood cells of chickens; and/or
the sample fluid (310) comprises whole blood.

13. The calibration sample kit of claim 11 or 12, wherein the microfluidic chip (300, 700) is configured to hydrodynamically and/or viscoelastically focus the one or more red blood cells (100) contained in the sample fluid (310).

14. The calibration sample kit of any one of claims 11 to 13, further comprising a list of reference values for two or more optical distance values, wherein the reference values are associated with a device according to any one of claims 6 to 10 and indicative of whether the device (200) is functional or not.

15. A computer program product comprising a set of machine-readable instructions executable by a processing device, wherein the instructions cause the processing device to:
obtain a phase shift image (120) of a calibration sample comprising one or more red blood cells (100) having a nucleus (102);
determine a first phase shift (ϕ₁) at a first position (x₁) in the phase shift image (120), wherein the first position (x₁) is within the nucleus (102) of a target cell selected from the one or more red blood cells (100);
determine a second phase shift (ϕ₂) at a second position (x₂) in the phase shift image (120), wherein the second position (x₁) is within the cytoplasm (104) of the target cell;
compare the first and second phase shifts (ϕ₁, ϕ₂) to one or more reference values; and
determine whether a device (200) that the phase shift image has been taken with is functional based on the comparison of the determined optical distance values and the one or more reference values.

## Patentansprüche

1. Verfahren (400) zum Kalibrieren einer Vorrichtung (200) zur optischen Analyse einer biologische Zellen enthaltenden Probe, wobei das Verfahren (400) Folgendes umfasst:
Bereitstellen einer Kalibrierungsprobe, die ein oder mehrere rote Blutkörperchen (100) mit einem Kern (102) umfasst;
Bestimmen eines ersten optischen Abstandswerts unter Verwendung der Vorrichtung (200), wobei der erste optische Abstandswert eine optische Weglänge entlang eines ersten optischen Wegs kennzeichnet, der sich durch den Kern (102) einer Zielzelle erstreckt, die aus dem einen oder den mehreren roten Blutkörperchen (100) ausgewählt ist;
Bestimmen eines zweiten optischen Abstandswerts unter Verwendung der Vorrichtung (200), wobei der zweite optische Abstandswert eine optische Weglänge entlang eines zweiten optischen Wegs kennzeichnet, der sich durch die Zielzelle, aber nicht durch den Kern (102) der Zielzelle erstreckt;
Vergleichen des ersten und des zweiten optischen Abstandswerts mit einem oder mehreren Referenzwerten; und
Bestimmen, ob die Vorrichtung (200) funktionsfähig ist, basierend auf dem Vergleich der bestimmten optischen Abstandswerte und des einen oder der mehreren Referenzwerte.

2. Verfahren (400) nach Anspruch 1, ferner umfassend:
Bestimmen eines dritten optischen Abstandswerts unter Verwendung der Vorrichtung (200), wobei der dritte optische Abstandswert eine optische Weglänge entlang eines dritten optischen Wegs kennzeichnet, der sich durch die Kalibrierungsprobe, aber nicht durch eines des einen oder der mehreren roten Blutkörperchen (100) erstreckt,
wobei das Verfahren (400) vorzugsweise ferner das Vergleichen einer Differenz zwischen dem ersten und dem dritten optischen Abstandswert mit einem ersten Referenzwert und das Vergleichen einer Differenz zwischen dem zweiten und dem dritten optischen Abstandswert mit einem zweiten Referenzwert umfasst.

3. Verfahren (400) nach Anspruch 1 oder 2, wobei das eine oder die mehreren roten Blutkörperchen (100) rote Blutkörperchen von Wirbeltieren ohne Säugetiere sind, insbesondere rote Blutkörperchen von Vögeln, vorzugsweise rote Blutkörperchen von Hühnern.

4. Verfahren (400) nach einem der vorhergehenden Ansprüche, wobei die Kalibrierungsprobe ein Probenfluid (310) umfasst, das das eine oder die mehreren roten Blutkörperchen (100) enthält, insbesondere wobei das Probenfluid (310) in einem Messvolumen (304) in einem Mikrofluidsystem (300, 700) bereitgestellt wird, wobei das Bereitstellen des Probenfluids (310) in dem Messvolumen (304) vorzugsweise das hydrodynamische und/oder viskoelastische Fokussieren des einen oder der mehreren roten Blutkörperchen (100) in dem Mikrofluidsystem (300, 700) umfasst.

5. Verfahren (400) nach einem der vorhergehenden Ansprüche, wobei die Vorrichtung (200) ein Mikroskop (202) umfasst, das zum Aufnehmen von Phasenverschiebungsbildern konfiguriert ist, insbesondere ein digitales holographisches Mikroskop, wobei vorzugsweise:
das Bestimmen des ersten optischen Abstandswerts das Bestimmen einer ersten Phasenverschiebung (ϕ₁) an einer ersten Position (x₁) in einem Phasenverschiebungsbild (120) der Kalibrierungsprobe umfasst, wobei sich die erste Position (x₁) innerhalb des Kerns (102) der Zielzelle befindet; und
das Bestimmen des zweiten optischen Abstandswerts das Bestimmen einer zweiten Phasenverschiebung (ϕ₂) an einer zweiten Position (x₂) in dem Phasenverschiebungsbild (120) der Kalibrierungsprobe umfasst, wobei sich die zweite Position (x₁) innerhalb des Zytoplasmas (104) der Zielzelle befindet,
insbesondere wobei das Verfahren (400) ferner das Bestimmen der ersten und der zweiten Position (x₁, x₂) in dem Phasenverschiebungsbild (120) durch Identifizieren einer plateauartigen Region innerhalb des Kerns (102) bzw. des Zytoplasmas (104) der Zielzelle in dem Phasenverschiebungsbild (120) umfasst.

6. Vorrichtung (200) zur optischen Analyse einer biologische Zellen enthaltenden Probe, wobei die Vorrichtung (200) eine Steuerung (214) und ein Mikroskop (202) umfasst, das zum Aufnehmen von Phasenverschiebungsbildern der Probe konfiguriert ist, wobei die Steuerung (214) zu Folgendem konfiguriert ist:
Erhalten eines Phasenverschiebungsbildes (120) einer Kalibrierungsprobe, die ein oder mehrere rote Blutkörperchen (100) mit einem Kern (102) umfasst;
Bestimmen einer ersten Phasenverschiebung (ϕ₁) an einer ersten Position (x₁) in dem Phasenverschiebungsbild (120), wobei sich die erste Position (x₁) innerhalb des Kerns (102) einer Zielzelle befindet, die aus dem einen oder den mehreren roten Blutkörperchen (100) ausgewählt ist;
Bestimmen einer zweiten Phasenverschiebung (ϕ₂) an einer zweiten Position (x₂) in dem Phasenverschiebungsbild (120), wobei sich die zweite Position (x₂) innerhalb des Zytoplasmas (104) der Zielzelle befindet;
Vergleichen der ersten und der zweiten Phasenverschiebung (ϕ₁, ϕ₂) mit einem oder mehreren Referenzwerten; und
Bestimmen, ob die Vorrichtung (200) funktionsfähig ist, basierend auf dem Vergleich der bestimmten Phasenverschiebungen (ϕ₁, ϕ₂) und des einen oder der mehreren Referenzwerte.

7. Vorrichtung (200) nach Anspruch 6, wobei die Steuerung (214) ferner zu Folgendem konfiguriert ist:
Bestimmen einer dritten Phasenverschiebung (ϕ₃) an einer dritten Position (x₃) in dem Phasenverschiebungsbild (120), wobei sich die dritte Position (x₃) neben der Zielzelle befindet; und
Vergleichen einer Differenz zwischen der ersten und der dritten Phasenverschiebung (ϕ₁, ϕ₃) mit einem ersten Referenzwert und Vergleichen einer Differenz zwischen der zweiten und der dritten Phasenverschiebung (ϕ₂, ϕ₃) mit einem zweiten Referenzwert.

8. Vorrichtung (200) nach Anspruch 6 oder 7, wobei das Mikroskop (202) ein digitales holographisches Mikroskop ist.

9. Vorrichtung (200) nach einem der Ansprüche 6 bis 8, wobei die Vorrichtung (200) zu Folgendem konfiguriert ist:
Empfangen eines Mikrofluidchips (300, 700) mit einem Messvolumen (304), das zum Empfangen eines Probenfluids (310) konfiguriert ist, und einem Detektionsfenster (706) zum Abbilden des Probenfluids (310) in dem Messvolumen (304); und
Abbilden des Probenfluids (310) durch das Detektionsfenster (706) mit dem Mikroskop (202),
insbesondere wobei:
die Vorrichtung (200) zum hydrodynamischen und/oder viskoelastischen Fokussieren von in dem Probenfluid (310) enthaltenen biologischen Zellen (100) an einem Fokuspunkt des Mikroskops (202) in dem Messvolumen (304) konfiguriert ist; und/oder
die Steuerung (214) ferner zum Durchführen eines Ausrichtungsvorgangs durch Ändern eines Fokuspunkts des Mikroskops (202) und/oder eines mit dem Mikrofluidchip (300, 700) assoziierten Durchflussparameters konfiguriert ist.

10. Vorrichtung (200) nach einem der Ansprüche 6 bis 9, wobei die Steuerung (214) ferner zum Durchführen einer optischen Blutprobenanalyse einer eine Vielzahl von Blutzellen umfassenden Testprobe durch Folgendes konfiguriert ist:
Erhalten eines Phasenverschiebungsbildes (120) der Testprobe; und
Bestimmen eines Zelltyps eines oder mehrerer Blutkörperchen in der Testprobe aus dem Phasenverschiebungsbild (120).

11. Kalibrierungsprobenset zum Kalibrieren einer Vorrichtung (200) zur optischen Analyse einer biologische Zellen enthaltenden Probe unter Verwendung eines Verfahrens (400) nach einem der Ansprüche 1 bis 5, wobei das Kalibrierungsprobenset ein Probenfluid (310) umfasst, das ein oder mehrere rote Blutkörperchen (100) mit einem Kern (102) enthält, wobei das eine oder die mehreren roten Blutkörperchen (100) fixiert wurden, wobei das Kalibrierungsprobenset ferner einen Mikrofluidchip (300, 700) mit einem Messvolumen (304) und einem Detektionsfenster (706) zum Abbilden des Probenfluids (310) in dem Messvolumen (304) mit einem Mikroskop (202) umfasst, wobei ein übertragener Wellenfrontfehler des Detektionsfensters (706) kleiner als λ/2 ist.

12. Kalibrierungsprobenset nach Anspruch 11, wobei:
das eine oder die mehreren roten Blutkörperchen (100) rote Blutkörperchen von Wirbeltieren ohne Säugetiere sind, insbesondere rote Blutkörperchen von Vögeln, vorzugsweise rote Blutkörperchen von Hühnern; und/oder
das Probenfluid (310) Vollblut umfasst.

13. Kalibrierungsprobenset nach Anspruch 11 oder 12, wobei der Mikrofluidchip (300, 700) zum hydrodynamischen und/oder viskoelastischen Fokussieren des einen oder der mehreren in dem Probenfluid (310) enthaltenen roten Blutkörperchen (100) konfiguriert ist.

14. Kalibrierungsprobenset nach einem der Ansprüche 11 bis 13, ferner umfassend eine Liste von Referenzwerten für zwei oder mehr optische Abstandswerte, wobei die Referenzwerte einer Vorrichtung nach einem der Ansprüche 6 bis 10 zugeordnet sind und angeben, ob die Vorrichtung (200) funktionsfähig ist oder nicht.

15. Computerprogrammprodukt, umfassend einen Satz maschinenlesbarer Anweisungen, die durch eine Verarbeitungsvorrichtung ausführbar sind, wobei die Anweisungen die Verarbeitungsvorrichtung zu Folgendem veranlassen:
Erhalten eines Phasenverschiebungsbildes (120) einer Kalibrierungsprobe, die ein oder mehrere rote Blutkörperchen (100) mit einem Kern (102) umfasst;
Bestimmen einer ersten Phasenverschiebung (ϕ₁) an einer ersten Position (x₁) in dem Phasenverschiebungsbild (120), wobei sich die erste Position (x₁) innerhalb des Kerns (102) einer Zielzelle befindet, die aus dem einen oder den mehreren roten Blutkörperchen (100) ausgewählt ist;
Bestimmen einer zweiten Phasenverschiebung (ϕ₂) an einer zweiten Position (x₂) in dem Phasenverschiebungsbild (120), wobei sich die zweite Position (x₁) innerhalb des Zytoplasmas (104) der Zielzelle befindet;
Vergleichen der ersten und der zweiten Phasenverschiebung (ϕ₁, ϕ₂) mit einem oder mehreren Referenzwerten; und
Bestimmen, ob eine Vorrichtung (200), mit der das Phasenverschiebungsbild aufgenommen wurde, funktionsfähig ist, basierend auf dem Vergleich der bestimmten optischen Abstandswerte und des einen oder der mehreren Referenzwerte.

## Revendications

1. Procédé (400) d'étalonnage d'un dispositif (200) destiné à l'analyse optique d'un échantillon contenant des cellules biologiques, le procédé (400) comprenant :
la fourniture d'un échantillon d'étalonnage comprenant un ou plusieurs globules rouges (100) ayant un noyau (102) ;
la détermination d'une première valeur de distance optique à l'aide du dispositif (200), dans lequel la première valeur de distance optique caractérise une longueur de chemin optique le long d'un premier chemin optique s'étendant à travers le noyau (102) d'une cellule cible sélectionnée parmi les un ou plusieurs globules rouges (100) ;
la détermination d'une deuxième valeur de distance optique à l'aide du dispositif (200), dans lequel la deuxième valeur de distance optique caractérise une longueur de chemin optique le long d'un deuxième chemin optique s'étendant à travers la cellule cible, mais pas à travers le noyau (102) de la cellule cible ;
la comparaison des première et deuxième valeurs de distance optique à une ou plusieurs valeurs de référence ; et
la détermination du fait que le dispositif (200) est fonctionnel ou pas sur la base de la comparaison des valeurs de distance optique déterminées et des une ou plusieurs valeurs de référence.

2. Procédé (400) selon la revendication 1, comprenant en outre :
la détermination d'une troisième valeur de distance optique à l'aide du dispositif (200), dans lequel la troisième valeur de distance optique caractérise une longueur de chemin optique le long d'un troisième chemin optique s'étendant à travers l'échantillon d'étalonnage, mais pas à travers l'un quelconque des un ou plusieurs globules rouges (100),
dans lequel le procédé (400) comprend en outre de préférence la comparaison d'une différence entre les première et troisième valeurs de distances optiques à une première valeur de référence et la comparaison d'une différence entre les deuxième et troisième valeurs de distance optique à une deuxième valeur de référence.

3. Procédé (400) selon la revendication 1 ou 2, dans lequel les un ou plusieurs globules rouges (100) sont des globules rouges de vertébrés non mammifères, en particulier des globules rouges d'oiseaux, de préférence des globules rouges de poulets.

4. Procédé (400) selon l'une quelconque des revendications précédentes, dans lequel l'échantillon d'étalonnage comprend un fluide d'échantillon (310) contenant les un ou plusieurs globules rouges (100), en particulier dans lequel le fluide d'échantillon (310) est fourni dans un volume de mesure (304) dans un système microfluidique (300, 700), dans lequel la fourniture du fluide d'échantillon (310) dans le volume de mesure (304) comprend de préférence la focalisation hydrodynamique et/ou viscoélastique des un ou plusieurs globules rouges (100) dans le système microfluidique (300, 700).

5. Procédé (400) selon l'une quelconque des revendications précédentes, dans lequel le dispositif (200) comprend un microscope (202) configuré pour prendre des images de déphasage, en particulier un microscope holographique numérique, dans lequel de préférence :
la détermination de la première valeur de distance optique comprend la détermination d'un premier déphasage (ϕ₁) dans une première position (x₁) dans une image de déphasage (120) de l'échantillon d'étalonnage, dans lequel la première position (x₁) est à l'intérieur du noyau (102) de la cellule cible ; et
la détermination de la deuxième valeur de distance optique comprend la détermination d'un deuxième déphasage (ϕ₂) dans une deuxième position (x₂) dans l'image de déphasage (120) de l'échantillon d'étalonnage, dans lequel la deuxième position (x₁) est à l'intérieur du cytoplasme (104) de la cellule cible,
en particulier dans lequel le procédé (400) comprend en outre la détermination des première et deuxième positions (x₁, x₂) dans l'image de déphasage (120) en identifiant une région de type plateau à l'intérieur du noyau (102) et du cytoplasme (104), respectivement, de la cellule cible dans l'image de déphasage (120).

6. Dispositif (200) pour l'analyse optique d'un échantillon contenant des cellules biologiques, le dispositif (200) comprenant un dispositif de commande (214) et un microscope (202) configuré pour prendre des images de déphasage de l'échantillon, dans lequel le dispositif de commande (214) est configuré pour :
obtenir une image de déphasage (120) d'un échantillon d'étalonnage comprenant un ou plusieurs globules rouges (100) ayant un noyau (102) ;
déterminer un premier déphasage (ϕ₁) dans une première position (x₁) dans l'image de déphasage (120), dans lequel la première position (x₁) est à l'intérieur du noyau (102) d'une cellule cible sélectionnée parmi les un ou plusieurs globules rouges (100) ;
déterminer un deuxième déphasage (ϕ₂) dans une deuxième position (x₂) dans l'image de déphasage (120), dans lequel la deuxième position (x₂) est à l'intérieur du cytoplasme (104) de la cellule cible ;
comparer les premier et deuxième déphasages (ϕ₁, ϕ₂) à une ou plusieurs valeurs de référence ; et
déterminer si le dispositif (200) est fonctionnel sur la base de la comparaison des déphasages (ϕ₁, ϕ₂) déterminés et des une ou plusieurs valeurs de référence.

7. Dispositif (200) selon la revendication 6, dans lequel le dispositif de commande (214) est en outre configuré pour :
déterminer un troisième déphasage (ϕ₃) dans une troisième position (x₃) dans l'image de déphasage (120), dans lequel la troisième position (x₃) est adjacente à la cellule cible ; et
comparer une différence entre les premier et troisième déphasages (ϕ₁, ϕ₃) à une première valeur de référence et comparer une différence entre les deuxième et troisième déphasages (ϕ₂, ϕ₃) à une deuxième valeur de référence.

8. Dispositif (200) selon la revendication 6 ou 7, dans lequel le microscope (202) est un microscope holographique numérique.

9. Dispositif (200) selon l'une quelconque des revendications 6 à 8, dans lequel le dispositif (200) est configuré pour :
recevoir une puce microfluidique (300, 700) ayant un volume de mesure (304) configuré pour recevoir un fluide d'échantillon (310) et une fenêtre de détection (706) destinée à imager le fluide d'échantillon (310) dans le volume de mesure (304) ; et
imager le fluide d'échantillon (310) à travers la fenêtre de détection (706) avec le microscope (202),
en particulier dans lequel :
le dispositif (200) est configuré pour focaliser hydrodynamiquement et/ou vicoélastiquement des cellules biologiques (100) contenues dans le fluide d'échantillon (310) au niveau d'un point focal du microscope (202) dans le volume de mesure (304) ; et/ou
le dispositif de commande (214) est en outre configuré pour réaliser une procédure d'alignement en modifiant un point focal du microscope (202) et/ou un paramètre d'écoulement associé à la puce microfluidique (300, 700).

10. Dispositif (200) selon l'une quelconque des revendications 6 à 9, dans lequel le dispositif de commande (214) est en outre configuré pour réaliser une analyse optique d'échantillon sanguin d'un échantillon test comprenant une pluralité de globules en :
obtenant une image de déphasage (120) de l'échantillon test ; et
déterminant un type de cellule parmi un ou plusieurs globules dans l'échantillon test à partir de l'image de déphasage (120).

11. Kit d'échantillon d'étalonnage destiné à étalonner un dispositif (200) pour l'analyse optique d'un échantillon contenant des cellules biologiques à l'aide d'un procédé (400) selon l'une quelconque des revendications 1 à 5, le kit d'échantillon d'étalonnage comprenant un fluide d'échantillon (310) contenant un ou plusieurs globules rouges (100) ayant un noyau (102), dans lequel les un ou plusieurs globules rouges (100) ont été fixés, le kit d'échantillon d'étalonnage comprenant en outre une puce microfluidique (300, 700) ayant un volume de mesure (304) et une fenêtre de détection (706) pour imager le fluide d'échantillon (310) dans le volume de mesure (304) avec un microscope (202), dans lequel une erreur sur le front de l'onde transmise de la fenêtre de détection (706) est inférieure à λ/2.

12. Kit d'échantillon d'étalonnage selon la revendication 11, dans lequel :
les un ou plusieurs globules rouges (100) sont des globules rouges de vertébrés non mammifères, en particulier des globules rouges d'oiseaux, de préférence des globules rouges de poulets ; et/ou
l'échantillon de fluide (310) comprend du sang total.

13. Kit d'échantillon d'étalonnage selon la revendication 11 ou 12, dans lequel la puce microfluidique (300, 700) est configurée pour focaliser hydrodynamiquement et/ou vicoélastiquement les un ou plusieurs globules rouges (100) contenus dans le fluide d'échantillon (310).

14. Kit d'échantillon d'étalonnage selon l'une quelconque des revendications 11 à 13, comprenant en outre une liste de valeurs de référence pour deux valeurs de distance optique ou plus, dans lequel les valeurs de référence sont associées à un dispositif selon l'une quelconque des revendications 6 à 10 et indiquent si le dispositif (200) est fonctionnel ou non.

15. Produit de programme informatique comprenant un ensemble d'instructions lisibles par machine exécutables par un dispositif de traitement, dans lequel les instructions amènent le dispositif de traitement à :
obtenir une image de déphasage (120) d'un échantillon d'étalonnage comprenant un ou plusieurs globules rouges (100) ayant un noyau (102) ;
déterminer un premier déphasage (ϕ₁) dans une première position (x₁) dans l'image de déphasage (120), dans lequel la première position (x₁) est à l'intérieur du noyau (102) d'une cellule cible sélectionnée parmi un ou plusieurs globules rouges (100) ;
déterminer un deuxième déphasage (ϕ₂) dans une deuxième position (x₂) dans l'image de déphasage (120), dans lequel la deuxième position (x₁) est à l'intérieur du cytoplasme (104) de la cellule cible ;
comparer les premier et deuxième déphasages (ϕ₁, ϕ₂) à une ou plusieurs valeurs de référence ; et
déterminer si un dispositif (200) avec lequel l'image de déphasage a été prise est fonctionnel sur la base de la comparaison des valeurs de distance optique déterminées et des une ou plusieurs valeurs de référence.
